**Europäisches Patentamt**

**European Patent Office**

**Office européen des brevets**

(19)

(11) Publication number : **0 352 883 B1**

# EUROPEAN PATENT SPECIFICATION

(12)

(45) Date of publication of patent specification :
13.09.95 Bulletin 95/37

(51) Int. Cl.⁶ : **H04L 12/42**, H04L 12/24

(21) Application number : **89304502.1**

(22) Date of filing : **04.05.89**

(54) Network topology control method and apparatus.

(30) Priority : **25.07.88 US 224038**

(43) Date of publication of application :
**31.01.90 Bulletin 90/05**

(45) Publication of the grant of the patent :
**13.09.95 Bulletin 95/37**

(84) Designated Contracting States :
**AT BE CH DE ES FR GB GR IT LI LU NL SE**

(56) References cited :
**EP-A- 0 204 959
IEEE INTERNATIONAL CONFERENCE ON CUMPUTER DESIGN 5 October 1987, NEW YORK USpages 96 - 99; J.T.CARLO ET AL.: 'TMS380 Token Ring Adapter with built-innetwork management'
IEEE TRANSACTIONS ON COMPUTERS. vol. 37, no. 2, February 1988, NEW YORK USpages 182 - 189; R.ROM AT AL.: 'A reconfiguration algorithm for a double-looptoken-ring local area network'**

(56) References cited :
**PATENT ABSTRACTS OF JAPAN vol. 10, no. 75 (E-390)(2132) 25 March 1986 JP-A-60 223 249 (NIPPON KOKUYO TETSUDO) 7 November 1985**

(73) Proprietor : **DIGITAL EQUIPMENT CORPORATION
146 Main Street
Maynard, MA 01754 (US)**

(72) Inventor : **Hutchison, Jerry
7 Wychwood
Littleton, MA 01460 (US)**
Inventor : **Yang, Henry
11 Dascomb Road
Andover, MA 01810 (US)**
Inventor : **Hawe, William
16 Independence Road
Pepperell, MA 01463 (US)**

(74) Representative : **Goodman, Christopher et al
Eric Potter & Clarkson
St. Mary's Court
St. Mary's Gate
Nottingham NG1 1LE (GB)**

## Description

BACKGROUND OF THE INVENTION

I. FIELD OF THE INVENTION

This invention relates to computer local area networks and in particular to a method and apparatus for enforcing valid network topologies.

II. DESCRIPTION OF THE RELATED ART

Local area networks (LANs) interconnect a collection of stations for the purpose of exchanging information over a communications channel. LANs that cover extended distances and/or are based on fiber optics may configure a "ring" from a number of individual point to point physical connections between the stations comprising the network to form the communication channel. Such rings are exemplified by the FDDI (Fiber Distributed Data Interface) proposed by American National Standards Institute (ANSI) and IEEE standard 802.5-1985 "American National Standard for Token Ring Access Method," ANSI X3.139-1987, "Fiber Distributed Data Interface Media Access Control (MAC)," and ANSI X3.148-1988, "Fiber Distributed Data Interface Physical Layer Protocol (PHY)."

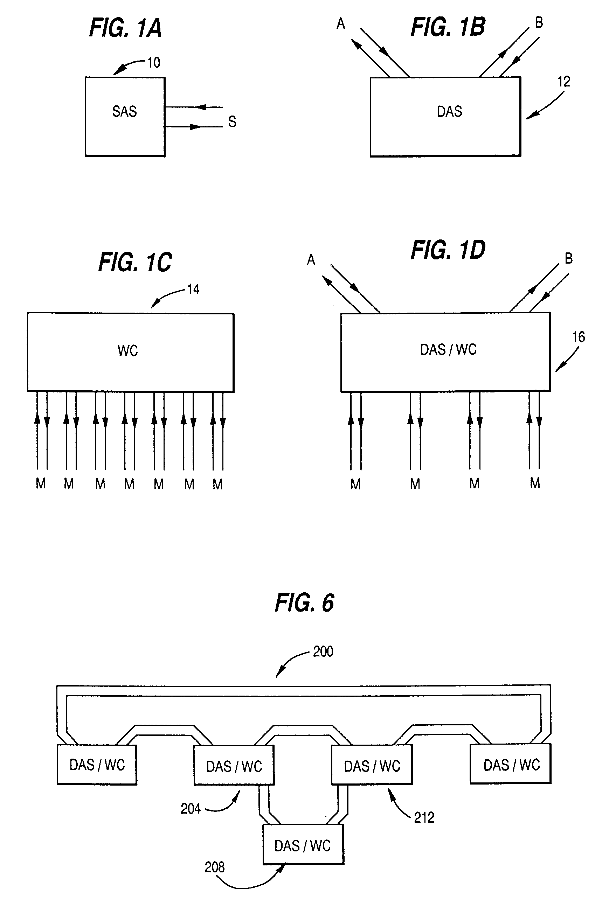

Double loop rings are often configured rather than single loop rings. In a double loop ring, each ring in fact consists of a primary and a secondary ring. The stations, or nodes, making up the LAN may be combinations of single attachment stations (SAS) 10 of Fig. 1A, having a single physical attachment point (which includes the media, or the hardware comprising the communication link to an adjacent station), dual attachment stations (DAS) 12 of Fig. 1B, having two attachment points, wire concentrators (WC) 14 of Fig. 1C, having many attachment points, and combination DAS/WC stations 16 of Fig. 1D having two attachment points on the DAS side and several attachment points on the WC side and internal connections (not shown) between the WC and the DAS. Each connection between two station attachment points is called a Physical Connection (PC) and has two physical links which carry signals in opposite directions and from which the LAN communications channel is configured. The communications channel may be configured as a physical loop with "trees" branching to stations not on the ring. In normal operation, the two rings are often formed into one ring, which will be called the primary ring.

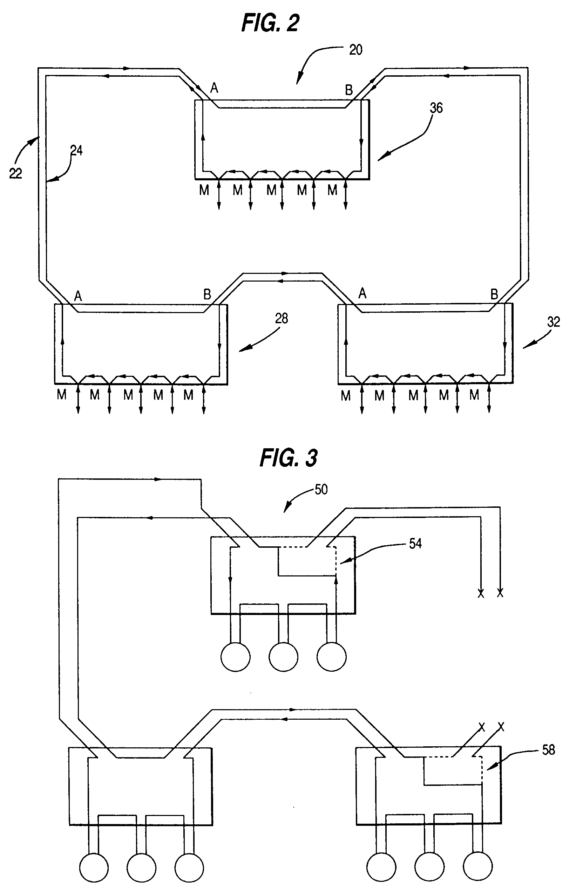

An example of a LAN configured as a ring of trees of the above mentioned station types is shown by LAN 20 of Fig. 2. The two physical links of each PC are connected to other PC's to provide two rings, a primary ring 22 and a secondary ring 24. Use of two rings ensures tolerance to station or channel failure as explained by Rom et al. in "A Reconfiguration Algorithm for a Double-Loop Token-Ring Local Area Network," IEEE Transactions on Computers, Vol 37, No. 2, February 1988. The network automatically reconfigures to eliminate the failed element and resume operation, as shown by LAN 50 of Fig. 3 where loopbacks 54 and 58 "heal" the ring and permit continued operation by the attached stations.

LAN stations may conform to the reference model Open Systems Interconnection (OSI) which calls for a layered station organization as proposed by the International Standards Organization and described by A.S. Tanenbaum in "Computer Networks," Prentice Hall, Inc., 1981, pages 16-21. Each station contains a Physical (PHY), Data Link, Network, Transport, Session, Presentation, and Application layer.

PHY provides electrical and/or optical connections, encodes and decodes the signals for all higher layers, and essentially supports a communication channel from one station to another and transmits and receives data to and from the PHY of a connected station.

The data link layer contains Media Access Control (MAC) which controls access to the communications media or channel, and the transmission of data packets to and receipt of data packets from the MACs of other stations using individual (MAC) addresses. A data packet is a sequence of data bits on the communications channel which contain the information to be passed from station to station. Connection management (CMT) controls the internal interconnection of the PHY and MAC entities within a station, the external configuration (topology), and establishes the logical connection between adjacent stations.

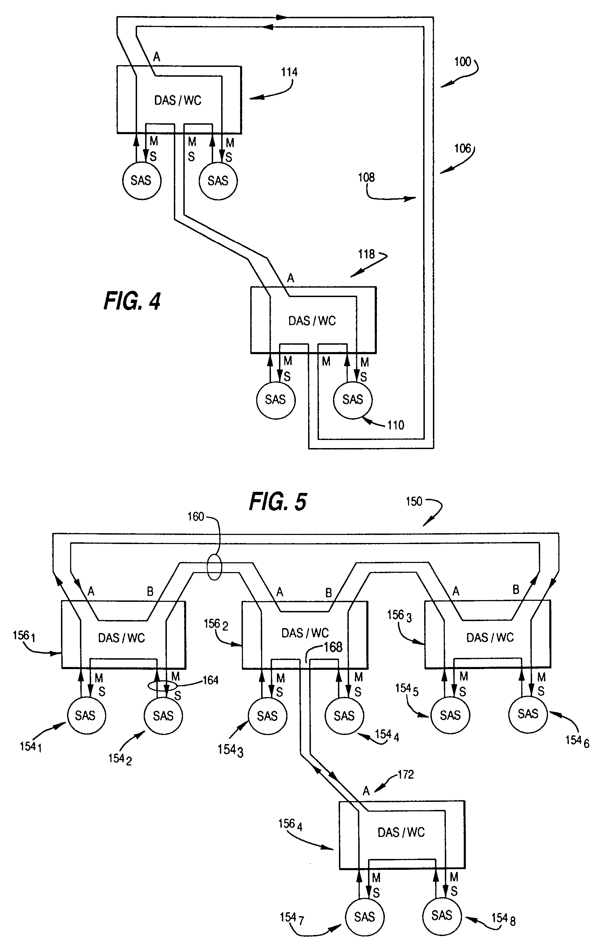

A DAS is a station, which when its connections type "A" and "B" are connected to the connections type "A" and "B" of another DAS, provides a double loop ring, as shown in Fig. 2. The primary and secondary rings 22 and 24 comprise each of the double loops. A connection type "M" on a WC or DAS/WC forms a "tree" configuration when attached to the connection type "A" of another station, as shown in Fig. 4. Even though a connection type "M" has two physical links, each link forms a part of a single ring. Thus, a DAS/WC station forms a double loop ring with its connections type "A" and "B" and the branches of a tree with its connections type "M." The SAS connects to each branch as a "leaf" of a tree.

EP 0 352 883 B1

Many ring topologies that can be created from SAS, DAS, WC and DAS/WC stations have the undesirable property that two stations may be physically cabled together, i.e., physically connected, but still be unable to exchange MAC layer data packets, as will be shown below. The stations are thus physically connected to each other, but not logically connected, because although the stations are wired together, the internal configuration of the stations prevents data packets from one station on one ring from being received by another station which is not configured on that ring. Thus, stations are considered to be "PHY" connected if and only if they are spanned by a physical cable path where all physical connections in the path are considered usable for data transfer. Stations are logically connected if and only if they can exchange MAC protocol data units (PDUs).

DAS and DAS/WC stations are intended to form double loop rings when attached to other DAS and DAS/WC stations via their connections type "A" and "B." Current Station Management protocols, as described by ANSI subcommittee X3T9.5, "FDDI Station Management (SMT)" in document no. X3T9.5/84-49, 1 August, 1987, do not globally identify a primary or secondary ring and can result in topologies, such as the twisted ring topology of LAN 20 of Fig. 2, if the stations are inadvertently connected incorrectly. Stations connected to DAS/WC stations 28 and 32 are connected to the communications channel forming primary ring 22, but station 36 considers ring 24 to be the primary ring. Stations attached to DAS/WC 36 are therefore unable to communicate, i.e., are not logically connected with stations attached to DAS/WCs 28 and 32 which are configured on the primary ring.

WC or the WC portions of DAS/WC stations are commonly configured as trees, where a connection type "M" of a WC or DAS/WC connects to a connection type "A" of a DAS or DAS/WC. Stations connected as trees do not form double loop rings. Rather, a single ring is intended. LAN 100 of Fig. 4 is a tree comprising two DAS/WC stations which illustrates another illegal topology that can result from improperly connecting stations. SAS 110 is physically connected but not logically connected to the remaining SAS nodes.

For rings to be useful as LANs, the configuration of physical connections must occur automatically as connections are added to or removed from the ring. In the case of FDDI, this has led to the exclusive use of "duplex physical connections" which provide bidirectional communication between all stations in the ring.

Autoconfiguration protocols in use or proposed for ISO PHY and Data Link layers do not detect or correct illegal topologies. Rather, they assume that the network is a legal topology and then correct faults or failures in the LAN.

The spanning tree algorithm, which identifies and corrects (eliminates) illegal topologies, runs in the network layer, and is very complicated, but allows all connection types to be the same and still results in all possible topologies as legal by configuring all networks as trees. Implementation requires too much information to be exchanged by stations to allow the algorithm to run in the MAC layer or Physical layer. In traditional network layer solutions, stations must exchange information with other non-adjacent stations which results in a complex distributed "N-party" algorithm.

IEEE International Conference on Computer Design, 5 October 1987, p.96-99; J.T. Carlo and J.M. Hughes: "TMS380 Token Ring Adapter with built-in network management" teaches network management using a LAN including detection, counting and handling network errors. The publication describes three partitions, the first relating to physical connection and control of the network, the second relating to protocol frame formatting for control and exchange of information between user nodes, and the third relating to functions at each node enabling fault, performance and accounting management to be controlled by a single entity in the communications system.

The present invention in its broad form resides in a topology controlling method for a LAN as recited in claim 1, and a LAN with self-controlling topology as in claim 14.

The invention will be clear in the description which follows, and in part will be obvious from the description, or may be learned by practice of the invention. The objects and advantages of the invention may be realized and obtained by means of the instrumentalities and combinations described hereinafter.

SUMMARY OF THE INVENTION

Described hereinafter is a method which is provided for automatically controlling the topology of a local area network (LAN) having a plurality of stations, each of the stations being any one of a single attachment station (SAS), a dual attachment station (DAS), a wire concentrator station (WC), or a DAS/WC station, the plurality of stations each having a PHY layer and each being interconnected by duplex point-to-point physical connections, comprising the steps of exchanging station connection information over the physical connections only between immediately adjacent stations using PHY layer signaling; determining, in each of the stations by analysis of the exchanged information, the validity of all connections to each of the immediately adjacent stations according to a predetermined connection validation list; and indicating invalid connections according to the validation list. Connections indicated as invalid may be rejected, or in some cases the LAN may be auto-

3

configured to a valid topology.

A local area network is also provided having a self-controlling topology comprising a plurality of stations including single attachment stations (SAS), dual attachment stations (DAS), wire concentrator stations (WC), and WC/DAS stations; a plurality of duplex point to point physical connections connecting the stations; means for exchanging station connection information over the physical connections between immediately adjacent stations using PHY layer signaling; means for determining, in each of the stations by analysis of the exchanged information, the validity of all connections to each of the immediately adjacent stations represents according to a predetermined connection validation list; and means for indicating invalid connections according to the validation list. Means is provided for rejecting invalid connections, or in some cases, means is provided for reconfiguring the network topology to create a valid topology.

The accompanying drawings, which are incorporated in and constitute a part of the specification, illustrate preferred embodiment of the invention and, together with the general description given above and the detailed description of the preferred embodiment given below, serve to explain the principles of the invention.

## BRIEF DESCRIPTION OF THE DRAWINGS

Fig. 1A is a schematic representation of a local area network (LAN) single attachment station (SAS);

Fig. 1B is a schematic representation of a dual attachment station (DAS);

Fig. 1C is a schematic representation of a wire concentrator station (WC);

Fig. 1D is a schematic representation of a combination DAS and WC station (DAS/WC);

Fig. 2 is an electrical schematic diagram of a LAN configured as a ring of trees using the types of stations of Figs. 1A-1D;

Fig. 3 is an electrical schematic diagram of the LAN of Fig. 2, reconfigured to "heal" a communications channel fault;

Fig. 4 is an electrical schematic diagram of a LAN improperly configured as tree of DAS/WC stations;

Fig. 5 is an electrical schematic diagram of a LAN configured as a ring of trees in a "legal" topology according to the teachings of the present invention;

Fig. 6 is an electrical schematic diagram of a LAN configured as a ring of trees in an "illegal," non-deterministic topology according to the teachings of the present invention;

Fig. 7 is a block diagram of the Data Link and Physical layers of a station incorporating the teachings of the present invention;

Fig. 8 is a flow chart of the functions performed by a physical connection module (PCM) incorporating the teachings of the present invention;

Fig. 9A is an electrical schematic diagram of a single data path switch element;

Fig. 9B is a block diagram of several data path switch elements interconnected as shown in Fig. 7;

Fig. 10 is an electrical schematic diagram of a physical protocol entity (PPE);

Fig. 11 is a flow chart of the functions performed by a PCM having a physical connection type "A," as part of step 328 of Fig. 8;

Fig. 12 is a flow chart of the functions performed by a PCM having a physical connection type "B," as part of step 328 of Fig. 8;

Fig. 13 is a flow chart of the functions performed by a PCM having a physical connection type "M," as part of step 328 of Fig. 8;

Fig. 14 is an electrical schematic diagram of a LAN having an illegal topology according to the present invention;

Fig. 15 is an electrical schematic diagram of the LAN of Fig. 14 reconfigured according to the teachings of the present invention to have a legal topology; and

Fig. 16 is a flow chart of the functions performed by a PCM having a physical connection type "S," as part of step 328 of Fig. 8.

## DESCRIPTION OF THE PREFERRED EMBODIMENT

Reference will now be made in detail to the present preferred embodiment of the invention as illustrated in the accompanying drawings.

LAN 150 of Fig. 5, having a self controlling topology, is shown by way of example and not as a limitation as comprising combinations of SAS stations $154_1$-$154_8$, WC stations, DAS stations and DAS/WC stations $156_1$-$156_4$ interconnected by duplex, point to point physical connections such as 160. This set of stations is necessary and sufficient to configure a double loop ring of trees topology and comprises a set of valid or "legal" station types. Other types of stations such as SAS/WC combination stations are not shown as they do not add new topology or behaviors over the given set. The DAS and WC stations are shown as combined as DAS/WC stations $156_1$-$156_4$. Although the two station types are combined into a single station, their individual functions remain the same whether applied singly or in combination.

Any subset of the DAS/WC is considered a valid station type. For example, in Figs. 1A to 1D, stations 12 and 14 are subsets of station 16. A station type is defined by its connection types and internal behavior. Connection types are specified for the purposes of topology control. Each station type of. Figs. 1A-1D has a letter assigned to the physical connection type associated with the station. SAS 10 has a connection type "S," WC 14 has at least one connection type "M," DAS 12 has two connections, types "A" and "B," and DAS/WC 16 has the same "A," "B," and "M" connection types as the individual DAS and WC stations.

Connections type "A" and "B" are intended to form double loop rings when connected to other connections type "A" and "B" of other stations. DAS station 16 has connections type "A" and "B" for this purpose. Connections type "M" and "S" are intended to form a single logical ring on a physical branching topology of a tree. Concentrators have multiple connections type "M" for this purpose, and the connection type "S" and its SAS is considered to be a "leaf" on a tree. A concentrator may also be a node in a tree by use of a connection type "M" of one station to a connection type "A" of a second station. Alternatively, a connection type "B" may be used to connect to the node in a tree, but both a connection type "A" and a connection type "B" may not be used. A tree may have one data path up or down, but not two. Therefore the formation of trees is restricted to connections type "A" in the preferred embodiment. A tree is the connection of a connection type "M" of one station to a connection type "A" of another station. This is a separate, non-conflicting use of a connection type "A" in a WC, where the connection type "A" is not intended to attach to the double loop ring.

Not every possible topology comprising the four station types of Figs. 1A-1D with the four connections type "A," "B," "M," and "S" is a legal topology, therefore a set of rules in the form of a validation list must be enforced concerning the connection types. The present invention provides control of a topology such that all connections which are offered by a user or installer for the LAN will have predictable and intuitively expected results, that is, adding a cable should never cause a reduction in the number of stations which can communicate, or the set of stations which communicate should never change because a distant station was powered off and then on. A topology which has this property is loosely defined as a "legal" topology.

The interconnections of the stations are determined to be either valid or invalid (also called legal or illegal) connections according to the following connection matrix." An invalid or illegal connection also results in an "illegal" topology.

```
                              "MY END"

                          A    B    M    S

                     A    I    V    V    I

            "OTHER   B    V    I    I    I        V=VALID

             END"    M   Rule  I    I    V       I=INVALID

                     S    I    I    V    V
```

Although LAN 150 comprises only 4 DAS/WC stations interconnected with each other and SAS stations to make a double loop ring LAN, any number of SAS, DAS, WC and DAS/WC stations may be interconnected providing the interconnections are valid according to the connection matrix. Application of the connection matrix to a topology results, among other things, in the global identification and enforcement of a primary ring.

In the preferred embodiment, a connection type "A" is defined to have the primary ring output. A requirement of a topology is to have a globally identified primary ring. This convention serves to resolve the symmetry in the dual ring. A connection type "B" is the PHY in a DAS that attaches to the primary ring input when attaching to the dual ring. Other conventions, such as where connections type "A" are the primary ring input may also be defined and enforced according to the invention with equal ease. It is a characteristic of connections type "A" and "B" that they form a double loop ring when connected to the connections type "A" and "B" of other DAS or DAS/WC stations. Connections type "A" and "B" in a DAS/WC are required to be adjacent to each other within the station, as will be discussed below. A connection type "S" is the PHY in a SAS. A connection type "M" is the PHY in a WC or DAS/WC that serves as a master to a connected station.

It is the characteristic of a connection type "M" to form a tree when connected to a connection type "A" or "S" of another station, but not both a connection type "A" and a connection type "B" otherwise a master/slave loop may exist, as will be discussed in more detail below. A tree is a single loop attachment rather than a double loop attachment to another station.

The connection types of the stations of Figs. 1A-1D correspond to the column and row labels "A B M S" of the connection matrix. Looking at communications channel 160 of Fig. 5, one end is connected to a connection type "B" of DAS/WC station $156_1$ and the other end is connected to a connection type "A" of DAS/WC station $156_2$. Arbitrarily picking station $156_1$ as "MY END" and station $156_2$ as the "OTHER END," an "A" to "B" connection is marked with a V in the connection matrix. Therefore, it is a valid connection according to a preferred embodiment of the invention.

Looking now to communications link 164 between the connection type "M" of station $156_1$ and the connection type "S" of station $154_2$, the connection matrix shows that an "S" to "M" or "M" to "S" connection is valid. Note that an "S" to "S" connection is also valid, but results in a network of only two SASs.

"S" to "A" and "S" to "B" connections are shown as invalid by the connection matrix; however, attaching an SAS to a connection type "A" or "B" will not result in an invalid topology, rather, it will prevent that connection type "A" or "B" from being attached as part of a dual ring. The "S" to "A" or "B" connections have, therefore, been made invalid as a matter of convenience to prevent DAS and DAS/WC stations from being inadvertently "dead ended."

In all cases but one the connection matrix is symmetric, that is, a connection is valid or invalid regardless of which station is called "MY END." The exception is the "A" to "M" connection which must follow the "RULE." The Rule is:

"My A" may accept as valid a connection to an "M" if and only if "My M" or "My B" does not connect to an "A." The rule prevents the formation of master/slave loops when stations are connected in a tree, as shown in Fig. 4.

Application of the connection matrix to LAN topologies requires that the LAN stations comprise only the four specified types: SAS, DAS, WC, and DAS/WC (including any subset of a DAS/WC), and will result in LAN configuration of the stations as a double loop ring of trees.

Previously, a legal topology was defined loosely by the expectations of a LAN user. For the purpose of describing the invention, a legal topology is now strictly defined to have the following necessary properties:

(1) Logical connectivity equals physical connectivity as previously defined. This is true for stations which choose to attach to the globally identified primary ring.

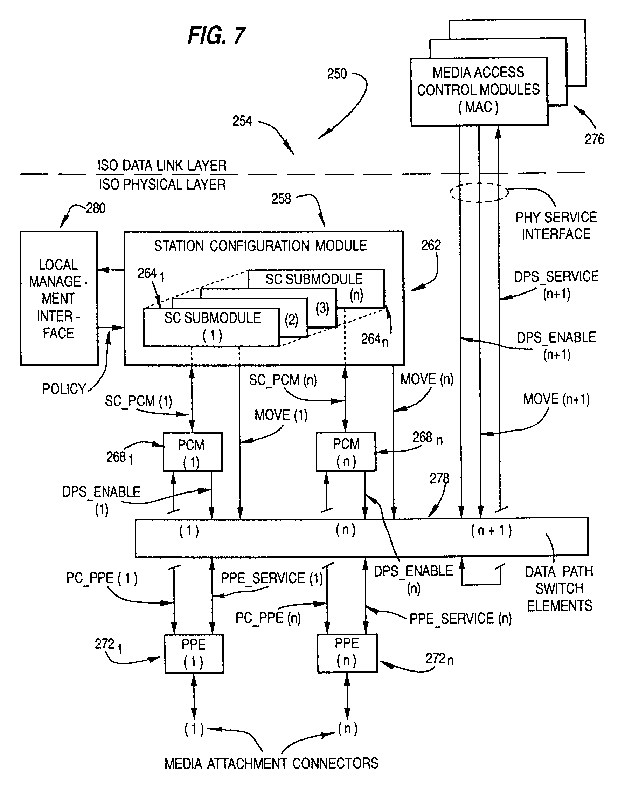

(2) The topology (and its representation) is deterministic for a given set of connections, that is, it must not be affected by reset or power-on sequences. (For example, LAN 200 of Fig. 6 is a non-deterministic topology, given that "A" to "M" and "B" to "M" connections are not allowed. If station 204 powers on first, then station 208 is connected to station 204. If station 212 powers on first, then station 208 is connected to station 212);

(3) Any subset of a legal topology must be a legal topology, that is, connectivity is lost if and only if physical connectivity is lost (a physical path may not be invalidated by the removal of another physical path); and

(4) There exists exactly one ring named "primary" which is globally unique within any physically connected set of stations.

A "legal" topology comprises only valid connections according to the connection matrix and has the property that all stations physically connected by the LAN are also logically connected to the LAN, that is, each station will be able to autoconfigure to send and receive MAC sublayer messages, also called frames or MAC PDUs, to and from all other stations connected to the ring.

Fig. 2 is an example of a conventional LAN having an "illegal" topology, that is, all stations are physically connected but some stations are not logically connected and thus from a user perspective, have invalid connections. The primary ring is not unique or globally identified, and the resulting configuration is a "twisted loop." DAS/WC stations 28, 32 and 36 and their attached SASs (not shown) are physically connected and form a dual ring, 22 and 24, but the SASs attached to DAS/WC stations 28 and 32 are connected to primary ring 22, while the SASs of DAS/WC station 36 are connected to secondary ring 24 and they are not logically connected to the stations on the primary ring. One may wish to intentionally configure a LAN in the manner of LAN 20, that is, have some stations on the primary ring and other stations on the secondary ring, but without the benefit of the invention, there is no facility such that a system manager may command a station to autoconfigure to make a logical connection happen or not happen. With the benefit of the invention, by identifying specific double loop ring attachments of DAS and DAS/WC stations as connections type "A" and "B," the primary ring can be globally identified and enforced to prevent inadvertently mis-connecting stations on either ring.

Applying the connection matrix to the stations of Fig. 2, the connection type "A" of station 36 to the connection type "A" of station 28 is identified as invalid and the cause of the non-unique primary ring. The "B" connection of station 32 to the "B" connection of station 36 is also an invalid connection according to the connection matrix.

LAN 100 of Fig. 4 is another example of an "illegal" topology. WC stations 114 and 118 are connected as for a tree, but with too many connections such that a physical (master/slave) loop occurs resulting in primary ring 106 and an unintended ring 108. Stations 114 and 118 are examples of WC stations that each have a connection type "A" so that the WC may form a master/slave tree configuration with another station. The WC station having a connection type A may also be considered to be a DAS/WC with an unused connection type "B." SAS 110 is physically connected to station 118, but is logically connected to unintended ring 108, whereas the remaining SASs are logically connected to primary ring 106 and therefore cannot communicate with SAS 110.

Taking station 114 as "MY END" and applying the connection matrix shows that the "M" to "A" connection of station 114 to station 118 is invalid, as is the "A" to "M" connection of station 114 to station 118. By the rule, station 114 may not accept an "A" connection to a station 118 "M" connection because station 114 already has an "M" that connects to an "A." The same rule applies to the "M" to "A" connection of station 114 to station 118. Thus the LAN has an "illegal" topology which would result in a lack of connectivity.

Application of the connection matrix to LANs having stations limited to the four station types of Fig. 1 with their four connection types, obviates the need to consider complex station interconnections and allows simple solutions to LAN topology. By working within these constraints, LAN topology control is achieved using multiple instances of distributed two-party algorithms that base decisions only on the exchange of local information. By restricting the set of configuration types and configuration rules, and requiring the configuration types of immediately adjacent stations to be learned or known for a physical connection, the global topology may be spanned by a single primary ring, and other previously discussed "legality" requirements are met. These restrictions eliminate the need to exchange large numbers of messages about and among non-adjacent stations such as are needed to apply the spanning tree algorithm. As a result, in a LAN incorporating the teachings of the present invention, topology management is done in the Physical layer using only four unique messages (line states) to signal connection types. Physical Connection Management (PCM) manages the physical connection which exists between one station's PHY and an adjacent station. PCM initializes the connection of the neighboring PHYs and manages PHY signaling.

In operation, application of the rules of the connection matrix to automatically control the topology of a LAN comprising combinations of the stations of Fig. 1 arranged in a ring of trees configuration is implemented in SCM.

In accordance with the invention, a method is provided for automatic controlling of LAN topology which begins during power up of a station by exchanging station connection information over the physical connections between immediately adjacent stations using messages that are easily transmitted using only PHY layer signaling. PHY layer signaling provides the advantage that individual MAC addresses are not required. In a preferred embodiment of the invention, shown by way of example and not as a limitation, the PHY of each station signals its connection type to an adjacent connected station using Physical layer symbols well-known in the art. The adjacent station accepts connections from other stations identified by only a limited set of Physical layer symbols, depending on its own connection type.

In the preferred embodiment, Physical layer symbols comprise combinations of line states. A line state is a sequence of more than 15 symbols. A master line state (MLS) is a series of alternating HALT and QUIET symbols. A halt line state (HLS) is a stream of HALT symbols. A quiet line state (QLS) is a series of QUIET line symbols. An idle line state (ILS) is a stream of IDLE line symbols, and an idle quiet line state (IQLS) is an alternating series of IDLE and QUIET symbols.

The line state messages sent or accepted by each connection type are shown in the connection type line state table, below.

| CONNECTION TYPE | SENDS | ACCEPTS |
|---|---|---|
| A⁻ | IQLS | MLS, HLS |
| B | HLS | IQLS |
| M | MLS | HLS, IQLS |
| S | HLS | HLS MLS |

Each connection type has a specified behavior, and this set of connection types allows construction of the most desirable topologies for the LAN. The symbols sent and accepted by the connection types of the line state table correspond to the valid connections permitted by the connection matrix, as will be described in more detail below.

The signaling method of the line state table for adjacent stations is one of many effective methods. Another method of signaling would be to send unique combinations of multiple line state sequences to indicate each connection type. Encoding could be used where one line state could represent a "1" and another line state could represent a "0," and a series of line states could be sent to indicate multiple bits of information. ILS followed by MLS could be the "1" and ILS followed by HLS could be "0." Unique combinations of "bits" could represent each connection type. The same messages may also be sent in MAC PDUs.

Looking at station $156_2$ of Fig. 5, a connection type "M" 168 is connected to a connection type "A" 172 of station $156_4$. Connection type "M" 168 sends an "M message" to the immediately adjacent station to which it is connected, i.e., connection type "A" 172. Connection type "A" 172, according to the line state table, sends an "A message" and accepts an "M message." Connection type "M" 168 accepts the "A message." Therefore, the connection of connection type "M" 168 to connection type "A" 172 is a valid connection.

Turning to Fig. 7, the implementation of the connection matrix by each of the connection types, "A," "B," "M" and "S" will be discussed in detail. Data Link layer 254 and PHY 258 are schematically represented as part of a general model of LAN station 250 of Fig. 7 insofar as they apply to implementation of the connection matrix to automatically control the network topology. Station 250 contains n connection ports or physical attachment points, each having a specified connection type, and each port is represented by i, where i is an integer from 1 to n. Values of i greater than n represent internal MACs in station 250.

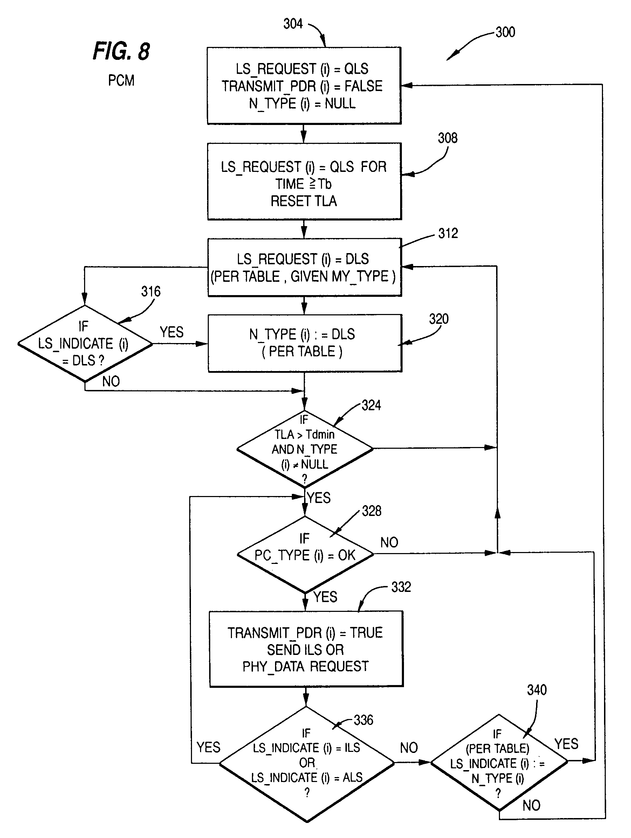

Station Configuration Module (SCM) 262 contains the hardware to implement the connection matrix for the station. The SCM is specific to the station type, and its operation for each of the allowable station types, i.e., DAS, DAS/WC, WC, and SAS, will be discussed in greater detail below. SCM 262 contains a number n of station configuration submodules (SCS) $264_1$-$264_n$, one for each connection, or media attachment connector of the station, and each SCS is configured to function as a specific connection type having behavior as specified for such connection type. Each SCS connects to a corresponding physical connection module or manager (PCM) $268_1$-$268_n$, thus establishing the topological behavior of each PHY attachment point. The PCM protocol establishes a shared state with another connected PCM which includes a connection status (either connected or disconnected), and a connection type (A, B, M, or S). Flowchart 300 of Fig. 8, to be discussed below, shows the protocol executed by each PCM to exchange connection types, establish a connection status, and accept, reject, or reconfigure connections.

The PCM protocols are multiple, concurrent processes which exchange information via defined interfaces. The interfaces between the boxes, or entities, in general station 250 of Fig. 7 are given names, and each interface may comprise one or more named signals. If the interface is a single signal, then the interface has the name of the signal. Signals may be of two types, either a control signal which means "do something," or a status variable passing information. Interfaces are shown drawn with single lines, although the signals may comprise one or more parallel bits on a multiline bus.

Interface SC_PCM(i) passes the necessary connection data back and forth between the SCS and the respective PCM. SC_PCM(i) provides a control directive to either connect or disconnect with the adjacent station, a signal PC_type(i), which signifies whether the connection to an adjacent station is determined by SCM to be valid or invalid, i.e., OK and Not_OK, and a signal MY_type(i) which identifies to PCM the respective connection as a connection type "A," "B," "M," or "S." SC_PCM(i) also returns a status signal N_type(i) from the PCM to the SCS, which is the adjacent station (neighbor) type. N_type(i) is either "A," "B," "M," "S," or null, where null means "don't know yet." Internal to SCM 262, SCSs $264_1$- $264_n$ pass signal MODE(i), which has values of Tree, Not_tree, and Root, and the signal Loop_warning, which has values of true and false, among themselves for the purpose of sharing local topology information within the SCM. Signal MOVE(i) provides a true or false input to data path switch element i. Loop_warning is a signal used for reconfiguring the network topology when a connection between a connection type "M" and a connection type "A" of an adjacent station is determined to be invalid.

Signal "Policy," having values of disconnect and move, is input to station 250 of Fig. 7 by a higher layer authority, designer, or manager, shown as local management interface 280, for use in resolution of detected faults in a ring of trees. The options for the manager are to instruct SCM to disconnect invalid tree connections or to reconfigure the invalid tree connections, where possible, as discussed below. Although not shown in the preferred embodiment, the response to an invalid connection could also be to signal the connection as invalid to local management interface 280, but not disconnect the invalid connection.

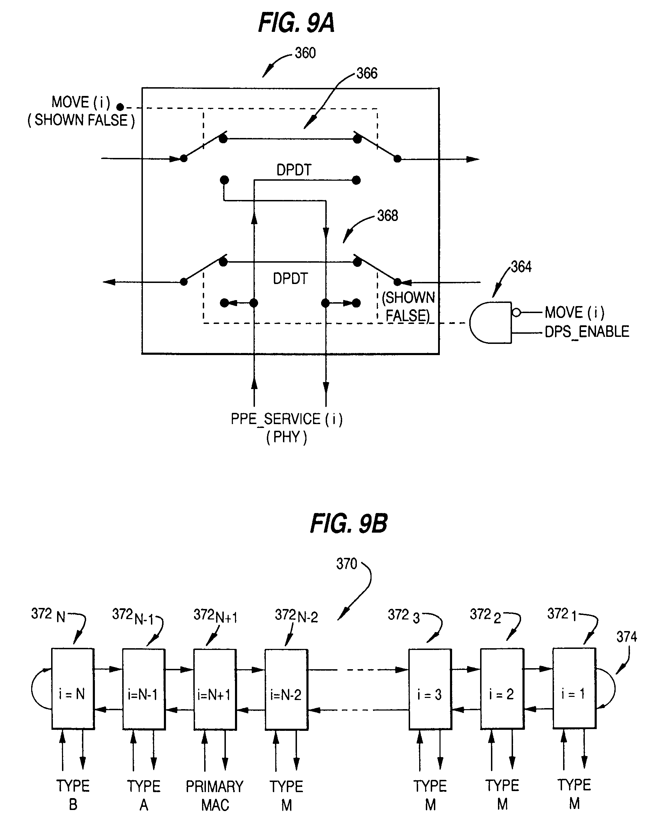

Each PCM $268_1$-$268_n$ controls a data path switch (DPS) element i of DPS 278, where i is 1 to n+1. DPS elements 1 to n have physical attachment points to external cables (the communications media). DPS element n+1 connects internally to the station primary loop MAC and has no external connection point. Although not shown, DPS element n+2, located between elements n and n-1, could be used to connect a MAC to a secondary ring. Switch 360 of Fig. 9A is an example of a DPS element which is controlled by signals MOVE(i) and DPS_enable, and which provides interface PC_PPE(i) to a respective physical protocol entity (PPE) $272_1$-$272_n$.

By controlling the internal configuration, SCM thus controls the externally viewed topology and the function of the PPE. MOVE(i) and DPS_enable(i) are either true or false and switch the respective PCM into or out of the primary ring. As shown in Fig. 9A, when MOVE(i) is false, DPDT switch 366 is in the bypass position, and when MOVE(i) is true and DPS_enable(i) is false, the false output of AND gate 364 sets DPDT switch 368 to the bypass position thereby reordering the attachment points.

DPS 278 of Fig. 7 is shown in greater detail by DPS 370 of Fig. 9B. Each DPS element $372_1$-$372_{N+1}$ is a DPS element similar to DPS 360 of Fig. 9A. DPS 370 is a correct configuration of a DPS of a reconfigurable DAS/WC station, shown generally by station 250 of Fig. 7. DPS elements $372_1$-$372_{N-2}$ are ports for connection points to the station as connections type "M." DPS elements $372_{N-1}$ and $372_N$ are connection points for a connection type "A" and a connection type "B," respectively. There may only be one connection type "A" and one connection type "B" in any one station. DPS element $372_{N+1}$ connects to the MAC for the primary ring. Each DPS element is connected on an internal ring 374 that passes through each DPS element twice, connecting to each DPDT switch as shown in Fig. 9A. Ring 374 may be one or more bits wide.

DPS elements $372_1$ to $372_{N+1}$ are identical, regardless of the connection type or internal station entity to which they connect. MOVE(i) for each DPS element greater than N-2 is set false, thus defining the internal topology of station 250. The order of DPS elements in a "legal" station however, is important. DPS elements for connections type "M" must be adjacent to one another on ring 374. DPS element $372_{N+1}$, which connects to the station MAC for the primary ring, is connected between the DPS element $372_{N-1}$ for the connection type "A" and DPS element $372_{N-2}$ for the highest numbered connection type "M." DPS element $372_N$ (the highest numbered DPS element having a connection point external to the station) is connected immediately adjacent to DPS element $372_{N-1}$ for the connection type "A." A DPS element for a MAC for a secondary ring (not shown) would be connected between DPS element $372_{N-1}$ for the connection type "A" and DPS element $372_N$ for the connection type "B." All subsets of DPS 370 are also "legal" data path switches.

Data flow within the DPS is from any of the connections type "M" (DPS elements $372_1$ to $372_{N-2}$) to the DPS element for the primary ring MAC (DPS element $372_{N+1}$) to the DPS element for the connection type "A" (DPS element $372_{N-1}$) to the DPS element for the secondary ring MAC (not shown) and then to the DPS element for the connection type "B." Although each DPS element of DPS 370 is similar, the order of the elements on internal ring 374 governs proper operation of DPS 370.

A DPS has the property that a connection type "M" can be moved from a position electrically located in terms of data flow between two connections type "M" to a position, electrically located in terms of data flow, most distant from the output of the connection type "A." Similarly, MOVE can be used to swap the roles of connections type "A" and B or move a MAC to or from a primary or secondary ring.

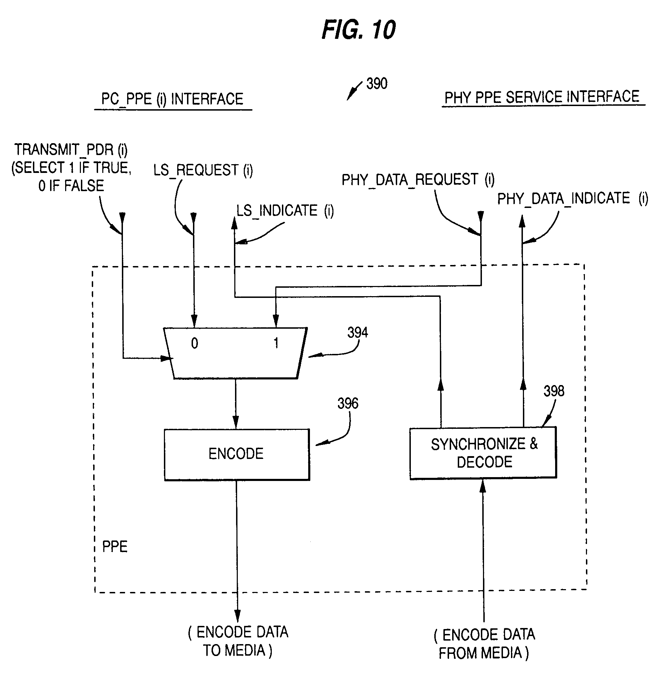

Each PPE(i) of station 250 of Fig. 7, represented generally by PPE 390 of Fig. 10, encodes and decodes messages for transmission on the communications channel or media. Interface PC_PPE(i) comprises control signals Transmit_PDR(i) and LS_request(i). Transmit_PDR(i) is a true or false signal applied to multiplexer 394 of PPE 390 and determines whether signal LS_request(i) or PHY_data_request(i) is encoded by encoder 396 and passed to the media. Multiplexer 394 of Fig. 10, under control of Transmit_PDR(i), directs the transmission of LS_request(i) or PHY_data_request(i) from PPE 390. Decoder 398 receives signals from the media and generates LS_indicate(i) and PHY_data_indicate(i).

LS_request(i) is the line state message sent to the adjacent station, and comprises the prior mentioned line states QLS, HLS, MS, IQLS and ILS, or a combination of codes to signal connection type. PHY_data_request(i) is the data from the next PHY entity or from a higher layer of the station. Interface PC_PPE(i) also provides status signal LS_indicate(i), which is passed from a PPE to its respective PCM. LS_indicate(i) is the line state or message representing its connection type received from the adjacent station.

Each PPE(i) has a PPE service interface, PPE_service(i), which passes protocol data units transmitted to or received from the media. The ring is formed of point to point links, thus data is often passed directly between PPE's as determined by the DPS. Each station may have any number of MACs or no MACs. MAC 276 is connected to data path switch element n+1 because switch n+1 does not correspond to a physical attachment point for the media.

PHY_data_indicate(i) is the name of the data received by the PPE from the media, and as mentioned PHY_data_request(i) is the name of the data output to the PPE towards the media.

Flowchart 300 of Fig. 8 shows the sequence of events performed by each PCM(i) to establish contact with a PCM(i) of an adjacent (connected neighbor or "OTHER END" as shown by the connection matrix) station and to validate the connection.

In accordance with the invention a method is provided for exchanging station connection information over the physical connections, or media, between adjacent stations. Steps 304-324 of flowchart 300, provided by way of example and not as a limitation, show the steps performed by PCM(i) to exchange station connection information.

9

Initially, LS_request(i) is set to QLS, Transmit_PDR(i) is set to false, and N_type(i) is set to null in step 304. DPS_enable(i) is always set equal to Transmit_PDR(i). After an initialization time $T_b$, timer TLA is reset to zero, step 308, and LS_request is sent to DLS, where DLS represents the set of line states or line state messages that identify the connection type, i.e., "A," "B," "M," or "S," of the PCM(i), which corresponds to MY_type(i), step 312. The duration of $T_b$ is chosen to be long enough to ensure that the adjacent station's PCM(i) has time to "see" the transmitted QLS, and thus ensuring the initialization of a new connection.

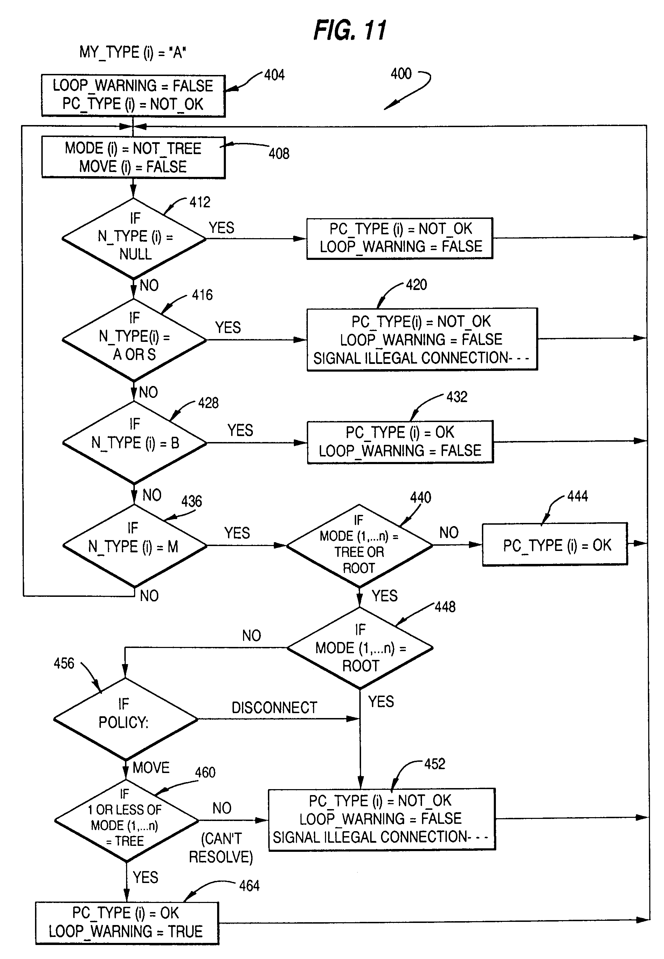

If LS_indicate(i), the line state message from the adjacent connection, is a valid line state, as determined in step 316, N_type(i) is set to the connection type corresponding to the signaled line state, step 320. The convention used in step 320 indicates that N_type(i) is set equal to one of the values "A," "B," "M," or "S" in the set DLS. MY_type is signaled until time period $T_{dmin}$ to ensure the connection type is received by the adjacent station. The duration of $T_{dmin}$ chosen to ensure that MY_type(i) is signaled long enough to be received by the adjacent station's PCM(i). If N_type(i) has been set, processing continues to determine if the connection is valid according to the allowable connections of the connection matrix, step 328. Depending on the connection type of the station doing the processing (MY_type), step 328 implements the process depicted by the flowcharts of Figs. 11 (MY_type(i) = "A"), 12 (MY_type(i) = "B"), 13 (MY_type(i) = "M"), or 16 (MY_type(i) = "S"), which will be discussed below.

If the N_type(i) to MY_type(i) connection is valid as decided in PCM according to the connection matrix, PC_type(i) is OK, and Transmit_PDR(i) is set to true to permit PPE(i) 390 to send data or an idle line state, step 332, indicating that the connection is accepted locally at "MY" end. If the connection is not valid, PCM(i) continues to look at LS_indicate(i) in order to validate any corrected configuration. During operation, PCM(i) continues to monitor LS_indicate(i), step 336, and if LS_indicate(i) is not either an active or idle line state, the connection type for LS_indicate(i) is compared to the prior value of N_type(i), step 340. If the new and old connection types disagree, or no type is sent, the connection is again initialized starting at step 304.

In accordance with the invention a method is provided for determining, in each of the stations by analysis of exchanged information, the validity of the connection to each of the adjacent stations according to a predetermined validation list. As shown by way of example and not as a limitation, flowchart 400 of Fig. 11 presents the steps performed by a station having a connection of type "A," i.e., MY_type(i)="A," to validate according to the connection matrix the connection to an adjacent station having a connection type of N_type(i).

Initially, in step 404, Loop_warning is false and PC_type(i) is Not_ok. MODE(i) is Not_tree, and MOVE(i) is false, step 408. N_type(i) is ascertained by PCM. If N_type(i) is null in step 412, connection is not yet established or connection has been broken and processing returns to step 408. If N_type(i) is no longer null, then processing of the connection type can continue with step 416. According to the connection matrix, a MY_type(i) of "A" may not connect to an N_type(i) of "A" or "S." Therefore, if N_type(i) is "A," PC_type is set to Not_ok (which controls concurrent PCM(i) processing as shown by flowchart 300 of Fig. 8), thereby rejecting the connection as invalid according to the connection matrix. Loop_warning is set to false, and an illegal connection is signaled in step 420. Local management interface 280 of Fig. 7 is informed of the illegal connection and sets an audio or visual alarm. In the preferred embodiment, PCM(i), having a PC_type(i)=Not_ok signal in step 328 of Fig. 8, continues to attempt to validate the connection, effectively locking out LAN data transfer other than line states between the PCM(i) and the adjacent station. Although not incorporated in the preferred embodiment, it is also valid to set an alarm, as will be discussed below, and to continue using the connection until fixed by a system operator, rather than to isolate the invalid connection.

If N_type(i) is not "A," processing continues with step 428 of Fig. 11. According to the connection matrix, if MY_type(i) is "A" and N_type(i) is "B," step 428, the connection is valid, PC_type(i) is set to OK, Loop_warning is set to false, step 432, and processing continues. If N_type(i) is neither "A," "B," nor "S," N_type(i) is checked for type "M," step 436. If N_type(i) is not "M," the validation process is started over. If N_type(i) is "M," the connection matrix requires application of the rule: MY_type "A" may keep a connection to an N_type "M" if and only if an "M" or a "B" of "MY" station does not connect to an N_type "A."

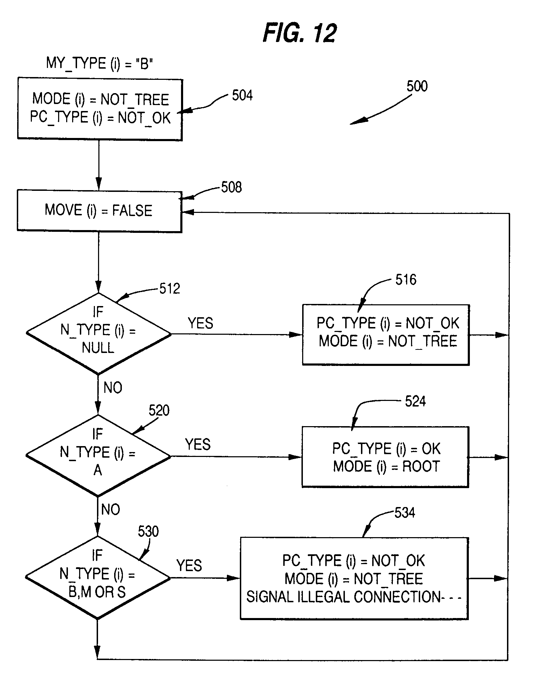

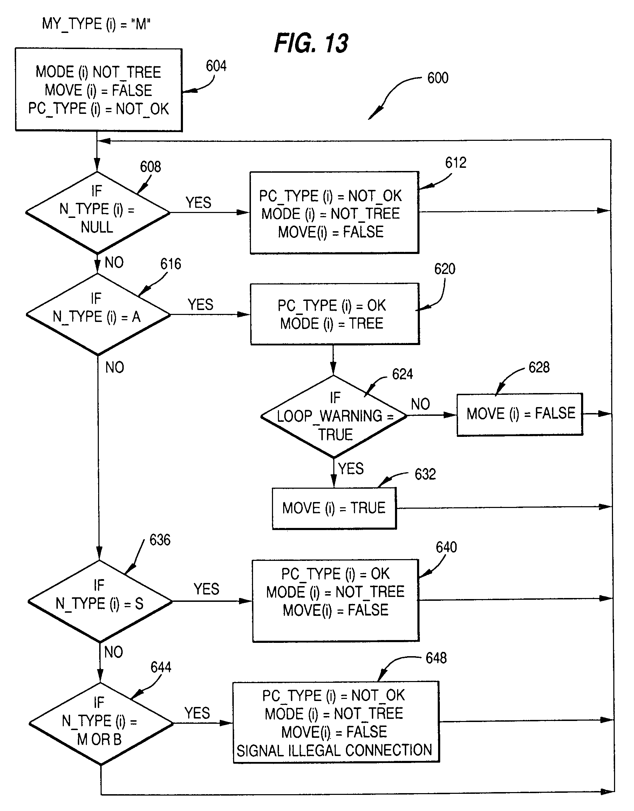

Application of the rule concerning trees begins in step 440, where the value of MODE(i) is checked for each SCS of "MY" station. If MODE(i) is not tree or root, then PC_type(i) is OK, step 444, and the connection is valid. MODE(i) is set to tree if MY_type(i) is "M" and it is connected to an N_type(i) of "A," as shown in steps 616 and 620 of Fig. 13. MODE(i) is set to root in steps 520 and 524 of Fig. 12 if MY_type(i) is "B" and N_type(i) is "A."

If any MODE(i) of the SCM is root in Fig. 11, step 448, then the connection is invalid, and in step 452, PC_type(i) is set to Not_ok, which rejects the connection, Loop_warning is set to false, and an illegal connection is signaled to local management interface 280 of Fig. 7. Local management interface 280 indicates that the connection is invalid. If a MODE(1, . . ,n) in step 448 is tree, then the status of Policy, step 456, determines if the topology is to be reconfigured or whether the connection is to be considered invalid and rejected. Step 456 implements the policy set by the local station manager. If the policy is to disconnect N_type(i) = "M" connections

EP 0 352 883 B1

to connected to MY_type(i) = "A" connections which are invalid under the rule because another MY_type(i) "M" within "MY" station is connected to a N_type(i) "A," then step 452 of Fig. 11 is executed to set PC_type(i) to Not_ok, thereby rejecting the connection, set Loop_warning to false, and to signal an illegal connection to local management interface 280 of Fig. 7, which indicates that the connection is invalid. If the policy is to reconfigure the topology to correct the global topology problem caused by MY_type(i) connection type "A" to N_type(i) connection type "M," then step 460 is executed.

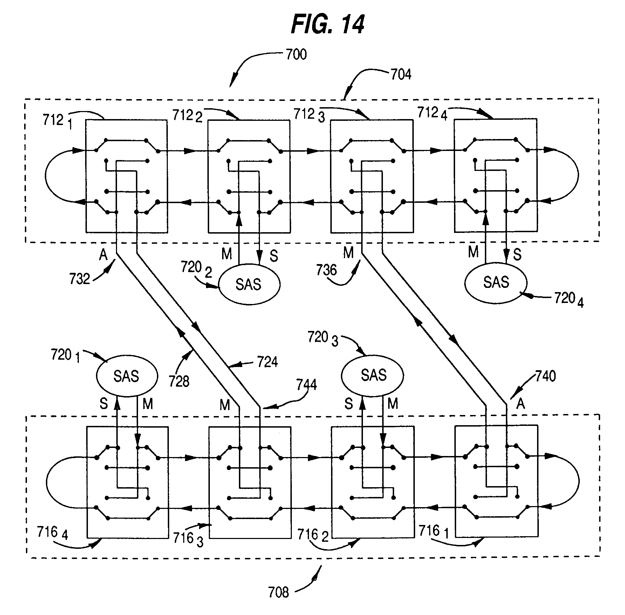

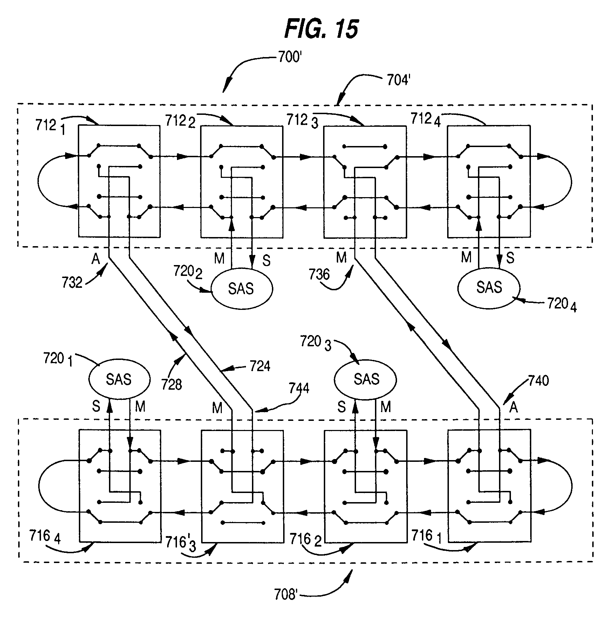

In step 460, if less than two of the MODE(i) signals are tree, i.e., zero or one MY_type(i) connections type "M" are connected to an N_type(i) connection type "A," then Loop_warning is set to true and PC_type(i) is set to OK and the connection is accepted. Application of Loop_warning to topology reconfiguration will be discussed below in regard to validation by a MY_type(i) connection type "M," which is shown by flowchart 600 of Fig. 13 and is shown electrically in Figs. 14 and 15. Loop_warning equal to "true" causes the DPS to move the connection having MODE(i) = "tree." If more than one MODE(i) = "tree," then the topology can't be resolved with local information and step 452 is executed rejecting the connection offered to the connection type "A."

Turning now to the case of an SCS having MY_type(i) = "B," the functions performed in determining the validity of the connections to adjacent stations are shown by flowchart 500 of Fig. 12. Initially MODE(i) is Not_tree and PC_type(i) is Not_ok, step 504, and MOVE(i) is false, step 508.

If N_type(i) is null in step 512, meaning N_type(i) has not yet been determined, PC_type(i) is set to Not_ok and MODE(i) is set to Not_tree, step 516, and the process is repeated beginning at step 508. If N_type(i) is "A" in step 520, the connection is valid according to the connection matrix, PC_type(i) is set to OK, and MODE(i) is set to root for application of the rule by another MY_type(i) connection type A of "MY" station, as discussed above in relation to flowchart 400 of Fig. 11. If N_type(i) is "B," "M," or "S" in step 530, the connection is not valid according to the connection matrix. Therefore, PC_type(i) is set to Not_ok, which rejects the invalid connection, MODE(i) is set to Not_tree, and an illegal connection in step 534 is signaled to local management interface 280 of Fig. 7 which identifies invalid connection.

Now addressing the case for an SCS having MY_type(i) = "M," the functions performed by PCM(i) in determining the validity of connections to adjacent stations is shown by flowchart 600 of Fig. 13. MODE(i) is initially set to Not_tree, MOVE(i) is set to false, and PC_type(i) is set to Not_ok, step 604. If N_type(i) is null in step 608, PC_type(i) is set to Not_ok, MODE(i) is set to Not_tree, and MOVE(i) is set to false in step 612. If N_type(i) is "A" in step 616, then the connection is valid according to the connection matrix, PC_type(i) is set to OK and MODE(i) is set to tree in step 620.

At this point, if application of the rule in steps 440-464 of Fig. 11 determined that the topology need not be reconfigured, i.e., Loop_warning is false, MOVE(i) is set to false and operation of PCM(i) continues. If the topology is to be reconfigured (as directed by an external policy decision), a method is provided to reconfigure connections that are invalid according to a validation list. As shown by way of example and not as a limitation, signals MOVE(i) and MODE(i), and Loop_warning are used by PCM(i) as shown in steps 620-632 of flowchart 600 to shift the corresponding DPS element to reconfigure connections that are invalid according to the connection matrix. Accordingly, when Loop_warning is set to true in step 464 of Fig. 11 and is detected in step 624 of Fig. 13, MOVE(i) is set to true in step 632, which alters the configuration of the respective data path switch element and the internal topology of this station.

An example of internal station reconfiguration and the effect on a LAN is shown by Figs. 14 and 15. LAN 700, which is configured in the same manner and having the same connectivity problem as LAN 100 of Fig. 4, comprises two DAS/WC stations 704 and 708, each having a connection type "A" and a plurality of connections type "M." The connection type "A" of each DAS/WC is connected to a connection type "M" of the adjacent DAS/WC. For simplicity, only the DPS of stations 704 and 708 are shown. No connections type "B" are needed for the example and are therefore not shown. Each DAS/WC contains four data path switch elements $712_1$-$712_4$ and $716_1$-$716_4$. Each data path switch element is controlled by signals DPS_enable(i) and MOVE(i) as shown by Fig. 9A. Each double pole double throw (DPDT) switch 366, 368 of data patch switch element 360 is shown positioned for a respective control signal for that switch of false. MOVE(i) and DPS_enable(i) control DPDT switch 366 through AND gate 364.

Before reconfiguration, LAN connectivity is absent. Even though each SAS of LAN 700 is physically con-nected, SASs $720_1$ and $720_4$ are not logically connected to SASs $720_2$ and $720_3$ or primary loop 724. Application of the rule to connection type "A" 732 illustrates detection of an invalid connection of MY_type(i) A to an N_type(i) "M" because another connection type "M," 736, of MY station is connected to a connection type "A." Applying the rule to connection type "A" 740 of station 708 reveals the same type of invalid connection.

After detection of the invalid connection, taking station 704 as "MY" station, and connection 736 as the MY_type(i) connection type "M" under analysis, Loop_warning is true in step 624 of Fig. 13 because it was set by SCS(i) connection type "A" in step 464 of Fig. 11. MOVE(i), where i now represents connection 736, is therefore set to true in step 632 of Fig. 13. Likewise, if station 708 is assumed to be "MY" station, MOVE(i) for

11

744 is set to true. As a result, data path switch elements $712_3$ and $716_3$ are reconfigured as shown in Fig. 15. The topology has successfully been reconfigured to place all four SASs $720_1$-$720_4$ in primary loop 724 by electrically moving the connection type "M" data path switch element in the "OTHER" station to the location most distant, from the viewpoint of data flow, from the connection type "A" output of the "OTHER" station. The "location most distant" is the location where data from the connection type "M" data path switch element in the "OTHER" station must flow through all the connections type "M" of the "OTHER" station before reaching the connection type "A" output of the "OTHER" station. This reconfiguration function is applicable to a tree of arbitrary height.

Returning to flowchart 600 of Fig. 13, if N_type(i) is "S" rather than "A" in step 636, the connection is valid according to the connection matrix and PC_type(i) is set to OK, MODE(i) is set to Not_tree, and MOVE(i) is set to false in step 640. If N_type(i) is "B" or "M" in step 644, the connection is invalid according to the connection matrix and, in step 648, PC_type(i) is set to Not_ok, MODE(i) is set to Not_tree, MOVE(i) is set to false, the connection is rejected, and an illegal connection is signaled to local management interface 280 of Fig. 7.

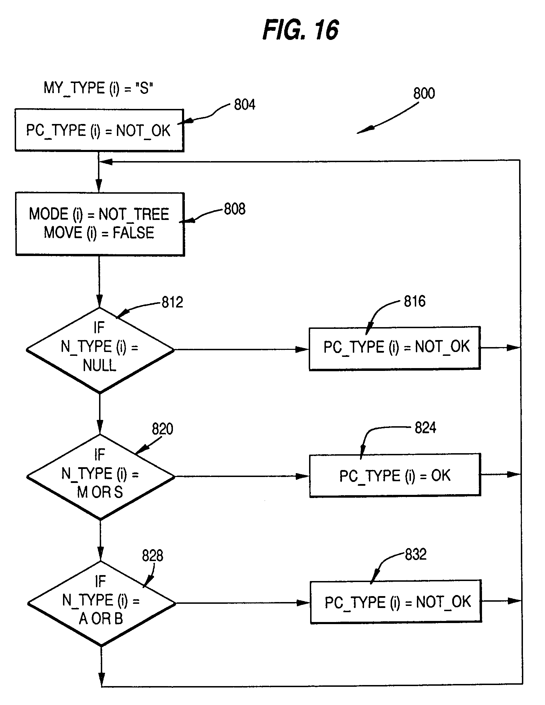

The validation of the connections to the last remaining connection type, "S," is performed by PCM(i) according to flowchart 800 of Fig. 16. Initially, in step 804, PC_type(i) is set to Not_ok. In step 808, MODE(i) is set to Not_tree and MOVE(i) is set to false. In step 812, if N_type(i) is null, PC_type(i) is set to Not_ok in step 816 and validation starts over at step 808. If N_type(i) is "M" or "S" in step 820, the connection is valid according to the connection matrix. Therefore, PC_type(i) is set to OK. If N_type(i) is "A" or "B" in step 828, the connection is invalid and PC_type(i) is set to Not_ok.

The preferred connection matrix is shown by way of example and not as a limitation as just one of many possible connection matrices that would be useful to implement a LAN topology autoconfiguration. As previously mentioned, "A" to "S" and "B" to "S" connection types were declared invalid for convenience of configuring networks as double loop topologies, not because of logical connectivity problems. Likewise "B" to "M" connections could be declared valid by the rule, while "A" to "M" connections could be invalid or either can be accepted in absence of the other, provided preference is given to one type of connection to provide that the topology will be deterministic.

Additional advantages and modifications will readily occur to those skilled in the art. The invention in its broader aspects is, therefore, not limited to the specific details, representative apparatus and illustrative example shown and described.

## Claims

1. A method for controlling the topology of a local area network LAN (150) having a plurality of stations, each of the stations being any one of a single attachment station SAS (10), a dual attachment station DAS (12), a wire concentrator station WC, a SAS/WC station, or a DAS/WC station, the plurality of stations each being interconnected by duplex point to point physical connections (160), the method comprising the steps of:

   exchanging station connection information over the physical connections only between adjacent stations;

   determining, in each of the stations, by analysis of said exchanged connection information, the validity of all connections to each of said adjacent stations according to a predetermined connection list PCM;

   identifying, in each of the stations, valid and invalid connections according to said connection list; and

   performing, in each of the stations, actions relating to the interconnections of the station, based on the results of the identifying step for the station, the actions of all the stations achieving a globally designated primary ring (22).

2. The method of claim 1 wherein said step of exchanging includes a step of exchanging three distinct types of messages (M,A,B).

3. The method of claim 1 wherein each of the physical connections of a station has two links and said step of determining includes a step of identifying one or both of said links of each of the duplex point to point physical connections to form a globally designated primary ring (22).

4. The method of claim 1 wherein said physical connections (160) define a primary ring (22) including at least a first one of the stations and also define a second ring (24) including at least a second one of the stations, and wherein said performing step includes a step of internally reconfiguring the first station, thereby allowing the second station to communicate over said globally designated primary ring.

5. The method of claim 1 wherein said performing step includes the steps of rejecting said invalid connections and preventing, via an internal reconfiguration of the station, the transmission or reception of user data over said rejected connections.

6. The method of claim 1 wherein each SAS has a physical connection of connection type "S", each DAS has physical connections of a connection type "A" and a connection type "B", each WC has a plurality of physical connections of a connection type "M", and each DAS/WC has physical connections of a connection type "A", a connection type "B" and a plurality of connection type "M", and wherein said step of exchanging includes exchanging information indicating the connection type of said physical connections of said adjacent stations, wherein said step of exchanging includes exchanging messages corresponding to each of said connection types.

7. The method of claim 1 wherein said step of determining includes a step of deciding the validity of said connection to each of said adjacent stations based upon the connection type of physical connection of the station sending said connection information and the connection type of the physical connection receiving said connection information, wherein said step of determining includes a step of validating said connections according to the following connection matrix:

$$
\begin{array}{c}
\textbf{"MY END"} \\[4pt]
\begin{array}{ccccc}
 & \underline{A} & \underline{B} & \underline{M} & \underline{S} \\
A & I & V & V & I \\
\text{"OTHER} \quad B & V & I & I & I \\
\text{END"} \quad M & \text{RULE} & I & I & V \\
S & I & I & V & V
\end{array}
\end{array}
\qquad
\begin{array}{l}
V = VALID \\
I = INVALID
\end{array}
$$

wherein the columns of said matrix correspond to the connection type of a physical connection of a first one of the stations at an end of a physical connection designated MY END, and the rows of said matrix correspond to the connection type sent by a second one of the stations at an end of a physical connection designated OTHER END, and wherein said RULE permits as valid a connection type "A" at the MY END to a connection type "M" at the OTHER END if and only if no connection type "M" or connection type "B" of said first one of the stations at the MY END is connected to a connection type "A" for said second one of the stations at the OTHER END.

8. The method of claim 7 wherein said step of deciding includes the steps of validating the connecting of a connection type "A" of a first one of the stations to a connection type "B" of a second one of the stations, invalidating the connecting of a connection type "A" of a first one of the stations and invalidating the connecting of a connection type "B" of a first one of the stations to a connection type "B" of a second one of the stations.

9. The method of claim 7 wherein said step of deciding includes the steps of invalidating the connecting of a connection type "B" of a first one of the stations to a connection type "M" of a second one of the stations, and validating the connecting of a connection type "A" of a first one of the stations to a connection type "M" of a second one of the stations if and only if no connection type "M" or connection type "B" of said first one of the stations is connected to a connection type "A" of said second one of the stations.

10. The method of claim 7 wherein said step of deciding includes a step of invalidating the connecting of a connection type "M" of a first station to a second station which is a DAS or DAS/WC when a connection type "A" or "B" of said first station is connected to a connection type "M" of a third station.

11. The method of claim 7 wherein said physical connections define a primary ring and also define a second ring including a tree of DAS/WC stations, each having an invalid physical connection of connection type "M", and wherein said performing step includes, for each DAS/WC station in a tree, a step of internally reconfiguring the DAS/WC stations, thereby allowing the stations to communicate over said globally designated primary ring.

12. The method of claim 6 wherein said step of determining includes a step of deciding the validity of a first connection between a first station and a second station based upon the connection types of the first connection and the connection types of a second connection between the first station and a third station.

13. The method of claim 1 wherein the determining step includes the steps of sending, by each of said physical connections of a connection type "A", connection information of a first message type; sending, by each of said physical connections of a connection type "B", connection information of a second message type; sending, by each of said physical connections of a connection type "M", connection information of a third message type; and sending, by each of said physical connections of a connection type "S", connection information of a fourth message type.

14. A local area network LAN (150) having a self controlling topology comprising:
   a plurality of stations (10,12,28,32), each of said stations being any one of a single attachment station SAS, a dual attachment station DAS, a wire concentrator station WC, an SAS/WC station or a DAS/WC station;
   a plurality of duplex point to point physical connections (160) interconnecting said stations;
   means, in each station, for exchanging station connection information, including connection type information for the physical connections, over said physical connections only between adjacent stations;
   means for determining, in each of the stations by analysis of said exchanged information, the validity of all connections to each of said adjacent stations according to a predetermined connection list;
   means, in each station, responsive to the determining means, for identifying valid and invalid connections according to said connection list; and
   means, in each station, responsive to the identifying means, for performing actions relating to the interconnection of the station, the actions of all the stations achieving a globally designated primary ring (22).

15. The LAN of claim 14 wherein said means for exchanging includes means for exchanging connection information including three distinct types of messages (M,A,B).

16. The LAN of claim 14 wherein each of said physical connections of a station has two links and said means for determining includes means for identifying as valid one or both of said links of each of the duplex point to point physical connections (160) that form a globally designated primary ring (22), wherein said means for performing includes means for rejecting, via an internal reconfiguration of the station, said invalid connections, thus preventing the transmission or reception of user data over said rejected connections, wherein said connections define a primary ring including at least a first one of the stations and also define a second ring (24) including at least a second one of the stations, and wherein said means for performing includes means for internally reconfiguring the first station, thereby allowing the second station to communicate over said primary ring.

17. The LAN of claim 16 wherein each said SAS includes a physical connection of connection type "S", each said DAS includes physical connections of a connection type "A" and a connection type "B", each said WC includes a plurality of physical connections of a connection type "M", and each said DAS/WC includes physical connections having a connection type "A", a connection type "B", and a plurality of connections type "M".

18. The LAN of claim 17 wherein said exchanged information indicates the connection type of said adjacent station, wherein said means for exchanging includes means for exchanging messages corresponding to said connection type, wherein said means for determining includes means for deciding the validity of said connection to each of said adjacent stations based upon the connection type of the physical connection of the station sending said connection information and the connection type of the physical connection receiving said connection information.

19. The LAN of claim 17 wherein said means for determining includes means for validating said connections according to the following connection matrix:

"MY END"

|  |  | A | B | M | S |
|---|---|---|---|---|---|
|  | A | I | V | V | I |
| "OTHER | B | V | I | I | I |
| END" | M | RULE | I | I | V |
|  | S | I | I | V | V |

V = VALID

I = INVALID

wherein the columns of said matrix correspond to the connection type of a physical connection of a first one of the stations at an end of a physical connection designated MY END and the rows of said matrix correspond to the connection type signaled by a second one of the stations at an end of a physical connection designated OTHER END, and wherein said RULE permits as valid a connection type "A" at the MY END to a connection type "M" at the OTHER END if and only if no connection type "M" or connection type "B" of said first one of the stations at the MY END is connected to a connection type "A" for said second one of the stations at the OTHER END.

20. The LAN of claim 18 wherein said means for deciding includes means for validating the connecting of a connection type "A" of a first one of the stations to a connection type "B" of a second one of the stations, invalidating the connecting of a connection type "A" of a first one of the stations to a connection type "A" of a second one of the stations and invalidating the connecting of a connection type "B" of a first one of the stations to a connection type "B" of a second one of the stations.

21. The LAN of claim 18 wherein said means for deciding includes means for invalidating the connecting of a connection type "B" of a first one of the stations to a connection type "M" of a second one of the stations, and validating the connecting of a connection type "A" of a first one of the stations to a connection type "M" of a second one of the stations if and only if no connection type "M" or connection type "B" of said first one of the stations is connected to a connection type "A" of said second one of the stations.

22. The LAN of claim 18 wherein said means for deciding includes means for invalidating the connecting of a connection type "M" of a first station to a second station which is a DAS or DAS/WC when a connection type "A" or "B" of said first station is connected to a connection type "M" of a third station.

23. The LAN of claim 14 wherein said means for determining includes means associated with each of said physical connections of a connection type "A" for sending a first message type, means in each of said physical connections of a connection type "B" for sending a second message type, means in each of said physical connections of a connection type "M" for sending a third message type, and means in each of said physical connections of a connection type "S" for sending a fourth message type.

24. The LAN of claim 23 wherein said means for determining includes means in each of said physical connections of said connection type "A" for accepting as valid said second and third message type, means in each of said physical connections of said connection type "B" for accepting as valid said first message type, means in each of said physical connections of said connection type "M" for accepting as valid said first and fourth message types, and means in each of said physical connections of said connection type "S" for accepting as valid said third and fourth message types.

**Patentansprüche**

1. Verfahren zum Steuern der Topologie eines lokalen Netzes LAN (150) mit einer Vielzahl von Stationen, wobei jede der Stationen irgendeine einer Einzelanschlußstation SAS (10), einer Zweifachanschlußstation DAS (12), einer Verdrahtungs-Konzentrationsstation WC, einer SAS/WC-Station oder einer DAS/WC-Station ist, wobei die Vielzahl von Stationen jeweils durch physikalische zweifache Punkt-zu-Punkt-Verbindungen (160) miteinander verbunden sind, wobei das Verfahren folgende Schritte aufweist:
    Austauschen von Stationsverbindungsinformation über die physikalischen Verbindungen nur zwischen benachbarten Stationen;

Bestimmen, in jeder der Stationen, durch Analyse der ausgetauschten Verbindungsinformation, der Gültigkeit aller Verbindungen zu jeder der benachbarten Stationen gemäß einer vorbestimmten Verbindungsliste PCM;

Identifizieren, in jeder der Stationen, gültige und ungültige Verbindungen gemäß der Verbindungsliste; und

Durchführen, in jeder der Stationen, von Handlungen, die die Verbindungen der Station betreffen, basierend auf den Ergebnissen des Identifizierungsschrittes für die Station, wobei die Handlungen aller Stationen einen global bestimmten primären Ring (22) erreichen.

2. Verfahren nach Anspruch 1, wobei der Schritt des Austauschens einen Schritt zum Austauschen dreier unterschiedlicher Typen von Nachrichten (M, A, B) enthält.

3. Verfahren nach Anspruch 1, wobei jede der physikalischen Verbindungen einer Station zwei Verbindungen aufweist, und der Schritt zum Bestimmen einen Schritt zum Identifizieren einer oder beider der Verbindungen jeder der physikalischen zweifachen Punkt-zu-Punkt-Verbindungen enthält, um einen global bestimmten primären Ring (22) zu bilden.

4. Verfahren nach Anspruch 1, wobei die physikalischen Verbindungen (160) einen primären Ring (22) definieren, der wenigstens eine erste der Stationen enthält, und auch einen zweiten Ring (24) definieren, der wenigstens eine zweite der Stationen enthält, und wobei der Durchführungsschritt einen Schritt eines internen Rekonfigurierens der ersten Station enthält, um dadurch der zweiten Station zu ermöglichen, über den global bestimmten primären Ring zu kommunizieren.

5. Verfahren nach Anspruch 1, wobei der Durchführungsschritt die Schritte eines Absonderns der ungültigen Verbindungen und, über ein internes Rekonfigurieren der Station, eines Verhinderns des Sendens oder des Empfangs von Benutzerdaten über die abgesonderten Verbindungen enthält.

6. Verfahren nach Anspruch 1, wobei jede SAS eine physikalische Verbindung eines Verbindungstyps "S" aufweist, jede DAS physikalische Verbindungen eines Verbindungstyps "A" und eines Verbindungstyps "B" aufweist, jede WC eine Vielzahl physikalischer Verbindungen eines Verbindungstyps "M" aufweist, und jede DAS/WC physikalische Verbindungen eines Verbindungstyps "A", eines Verbindungstyps "B" und eine Vielzahl von Verbindungstypen "M" aufweist, und wobei der Schritt des Austauschens ein Austauschen von Information enthält, die den Verbindungstyp der physikalischen Verbindungen der benachbarten Stationen anzeigt, wobei der Schritt des Austauschens ein Austauschen von Nachrichten entsprechend jedem der Verbindungstypen enthält.

7. Verfahren nach Anspruch 1, wobei der Schritt zum Bestimmen einen Schritt zum Entscheiden über die Gültigkeit der Verbindung jeder der benachbarten Stationen basierend auf dem Verbindungstyp einer physikalischen Verbindung der Station enthält, die die Verbindungsinformation sendet, und dem Verbindungstyp der physikalischen Verbindung, die die Verbindungsinformation empfängt, wobei der Schritt zum Bestimmen einen Schritt zum Gültigerklären der Verbindungen gemäß der folgenden Verbindungsmatrix enthält:

"MEIN ENDE"

|  |  | A | B | M | S |  |
|---|---|---|---|---|---|---|
|  | A | I | V | V | I |  |
| "ANDERES | B | V | I | I | I | V = GÜLTIG |
| ENDE" | M | REGEL | I | I | V | I = UNGÜLTIG |
|  | S | I | I | V | V |  |

wobei die Spalten der Matrix dem Verbindungstyp einer physikalischen Verbindung einer ersten der Stationen an einem Ende einer physikalischen Verbindung entsprechen, die mit MEIN ENDE bezeichnet ist, und die Reihen der Matrix dem Verbindungstyp entsprechen, der durch eine zweite der Stationen an einem Ende einer physikalischen Verbindung gesendet wird, die mit ANDERES ENDE bezeichnet ist, und wobei die REGEL einen Verbindungstyp "A" an MEINEM ENDE zu einem Verbindungstyp "M" am ANDEREN ENDE als gültig zuläßt, wenn und nur wenn kein Verbindungstyp "M" oder Verbindungstyp "B" der ersten der Stationen an MEINEM ENDE mit einem Verbindungstyp "A" für die zweite der Stationen am ANDEREN ENDE verbunden ist.

8. Verfahren nach Anspruch 7, wobei der Schritt des Entscheidens folgende Schritte enthält: Gültigerklären der Verbindung eines Verbindungstyps "A" einer ersten der Stationen mit einem Verbindungstyp "B" einer zweiten der Stationen, Ungültigerklären der Verbindung eines Verbindungstyps "A" einer ersten der Stationen, und Ungültigerklären der Verbindung eines Verbindungstyps "B" einer ersten der Stationen mit einem Verbindungstyp "B" einer zweiten der Stationen.

9. Verfahren nach Anspruch 7, wobei der Schritt des Entscheidens die folgenden Schritte enthält: Ungültigerklären der Verbindung eines Verbindungstyps "B" einer ersten der Stationen mit einem Verbindungstyp "M" einer zweiten der Stationen, und Gültigerklären der Verbindung eines Verbindungstyps "A" einer ersten der Stationen mit einem Verbindungstyp "M" einer zweiten der Stationen, wenn und nur wenn kein Verbindungstyp "M" oder Verbindungstyp "B" der ersten der Stationen mit einem Verbindungstyp "A" der zweiten der Stationen verbunden ist.

10. Verfahren nach Anspruch 7, wobei der Schritt des Entscheidens einen Schritt zum Ungültigerklären der Verbindung eines Verbindungstyps "M" einer ersten Station mit einer zweiten Station enthält, die eine DAS oder eine DAS/WC ist, wenn ein Verbindungstyp "A" oder "B" der ersten Station mit einem Verbindungstyp "M" einer dritten Station verbunden ist.

11. Verfahren nach Anspruch 7, wobei die physikalischen Verbindungen einen primären Ring definieren, und auch einen zweiten Ring definieren, der einen Baum von DAS/WC-Stationen enthält, von denen jede eine ungültige physikalische Verbindung vom Verbindungstyp "M" aufweist, und wobei der Durchführungsschritt für jede DAS/WC-Station in einem Baum einen Schritt zum internen Rekonfigurieren der DAS/WC-Stationen enthält, um dadurch den Stationen zu ermöglichen, über den global bestimmten primären Ring zu kommunizieren.

12. Verfahren nach Anspruch 6, wobei der Schritt zum Bestimmen einen Schritt zum Entscheiden über die Gültigkeit einer ersten Verbindung zwischen einer ersten Station und einer zweiten Station basierend auf den Verbindungstypen der ersten Verbindung und den Verbindungstypen einer zweiten Verbindung zwischen der ersten Station und einer dritten Station enthält.

13. Verfahren nach Anspruch 1, wobei der Bestimmungsschritt folgende Schritte enthält: Senden, durch jede der physikalischen Verbindungen eines Verbindungstyps "A", einer Verbindungsinformation eines ersten Nachrichtentyps; Senden, durch jede der physikalischen Verbindungen eines Verbindungstyps "B", einer Verbindungsinformation eines zweiten Nachrichtentyps; Senden, durch jede der physikalischen Verbindungen eines Verbindungstyps "M", einer Verbindungsinformation eines dritten Nachrichtentyps; und Senden, durch jede der physikalischen Verbindungen eines Verbindungstyps "S", einer Verbindungsinformation eines vierten Nachrichtentyps.

14. Lokales Netz LAN (150) mit einer Selbststeuerungstopologie, das folgendes aufweist:
eine Vielzahl von Stationen (10, 12, 28, 32), wobei jede der Stationen irgendeine einer Einzelanschlußstation SAS, einer Zweifachanschlußstation DAS (12), einer Verdrahtungs-Konzentrationsstation WC, einer SAS/WC-Station oder einer DAS/WC-Station ist;
eine Vielzahl von physikalischen zweifachen Punkt-zu-Punkt-Verbindungen (160), die die Stationen verbinden;
eine Einrichtung, in jeder Station, zum Austauschen von Stationsverbindungsinformation, einschließlich einer Verbindungstypinformation für die physikalischen Verbindungen, über die physikalischen Verbindungen nur zwischen benachbarten Stationen;
eine Einrichtung zum Bestimmen, in jeder der Stationen durch Analyse der ausgetauschten Information, der Gültigkeit aller Verbindungen zu jeder der benachbarten Stationen gemäß einer vorbestimmten Verbindungsliste;
eine Einrichtung, in jeder Station, die auf die Bestimmungseinrichtung antwortet, zum Identifizieren gültiger und ungültiger Verbindungen gemäß der Verbindungsliste; und
eine Einrichtung, in jeder Station, die auf die Identifizierungseinrichtung antwortet, zum Durchführen von Handlungen, die die Verbindung der Station betreffen, wobei die Handlungen aller Stationen einen global bestimmten primären Ring (22) erreichen.

15. LAN nach Anspruch 14, wobei die Einrichtung zum Austauschen eine Einrichtung zum Austauschen von Verbindungsinformation einschließlich dreier unterschiedlicher Typen von Nachrichten (M, A, B) enthält.

16. LAN nach Anspruch 14, wobei jede der physikalischen Verbindungen einer Station zwei Verbindungen aufweist, und die Einrichtung zum Bestimmen eine Einrichtung enthält zum Identifizieren einer oder beider der Verbindungen jeder der physikalischen zweifachen Punkt-zu-Punkt-Verbindungen (160) als gültig, die einen global bestimmten primären Ring (22) bilden, wobei die Einrichtung zum Durchführen eine Einrichtung enthält zum Absondern der ungültigen Verbindungen über eine interne Rekonfiguration der Station, um dadurch das Senden oder Empfangen von Benutzerdaten über die abgesonderten Verbindungen zu verhindern, wobei die Verbindungen einen primären Ring definieren, der wenigstens eine erste der Stationen enthält, und auch einen zweiten Ring (24) definieren, der wenigstens eine zweite der Stationen enthält, und wobei die Einrichtung zum Durchführen eine Einrichtung enthält zum internen Rekonfigurieren der ersten Station, um dadurch der zweiten Station zu ermöglichen, über den primären Ring zu kommunizieren.

17. LAN nach Anspruch 16, wobei jede SAS eine physikalische Verbindung vom Verbindungstyp "S" enthält, jede DAS physikalische Verbindungen vom Verbindungstyp "A" und vom Verbindungstyp "B" enthält, jede WC eine Vielzahl von physikalischen Verbindungen vom Verbindungstyp "M" enthält, und jede DAS/WC physikalische Verbindungen mit einem Verbindungstyp "A", einem Verbindungstyp "B" und einer Vielzahl von Verbindungstypen "M" enthält.

18. LAN nach Anspruch 17, wobei die ausgetauschte Information den Verbindungstyp der benachbarten Station anzeigt, wobei die Einrichtung zum Austauschen eine Einrichtung zum Austauschen von Nachrichten entsprechend dem Verbindungstyp enthält, wobei die Einrichtung zum Bestimmen eine Einrichtung zum Entscheiden über die Gültigkeit der Verbindung zu jeder der benachbarten Stationen basierend auf dem Verbindungstyp der physikalischen Verbindung der Station enthält, die die Verbindungsinformation sendet, und dem Verbindungstyp der physikalischen Verbindung, die die Verbindungsinformation empfängt.

19. LAN nach Anspruch 17, wobei die Einrichtung zum Bestimmen eine Einrichtung zum Gültigerklären der Verbindungen gemäß der folgenden Verbindungsmatrix enthält:

$$\begin{array}{c}
\text{"MEIN ENDE"}\\[4pt]
\begin{array}{cccc}
\underline{A} & \underline{B} & \underline{M} & \underline{S}
\end{array}
\end{array}$$

|  | | A | B | M | S | |
|---|---|---|---|---|---|---|
| | A | I | V | V | I | |
| "ANDERES | B | V | I | I | I | V = GÜLTIG |
| ENDE" | M | REGEL I | I | V | | I = UNGÜLTIG |
| | S | I | I | V | V | |

wobei die Spalten der Matrix dem Verbindungstyp einer physikalischen Verbindung einer ersten der Stationen an einem Ende einer physikalischen Verbindung entsprechen, die mit MEIN ENDE bezeichnet ist, und die Reihen der Matrix dem Verbindungstyp entsprechen, der durch eine zweite der Stationen an einem Ende einer physikalischen Verbindung angezeigt wird, die mit ANDERES ENDE bezeichnet ist, und wobei die REGEL ein Verbindungstyp "A" an MEINEM ENDE zu einem Verbindungstyp "M" am ANDEREN ENDE als gültig erklärt, wenn und nur wenn kein Verbindungstyp "M" oder Verbindungstyp "B" der ersten der Stationen an MEINEM ENDE mit einem Verbindungstyp "A" für die zweite der Stationen am ANDREN ENDE verbunden ist.

20. LAN nach Anspruch 18, wobei die Einrichtung zum Entscheiden eine Einrichtung enthält zum Gültigerklären der Verbindung des Verbindungstyps "A" einer ersten der Stationen mit einem Verbindungstyp "B" einer zweiten der Stationen, zum Ungültigerklären der Verbindung eines Verbindungstyps "A" einer ersten der Stationen mit einem Verbindungstyp "A" einer zweiten der Stationen, und zum Ungültigerklären der Verbindung eines Verbindungstyps "B" einer ersten der Stationen mit einem Verbindungstyp "B" einer zweiten der Stationen.

21. LAN nach Anspruch 18, wobei die Einrichtung zum Entscheiden eine Einrichtung enthält zum Ungültigerklären der Verbindung eines Verbindungstyps "B" einer ersten der Stationen mit einem Verbindungstyp "M" einer zweiten der Stationen, und zum Gültigerklären der Verbindung eines Verbindungstyps "A" einer ersten der Stationen mit einem Verbindungstyp "M" einer zweiten der Stationen, wenn und nur wenn kein Verbindungstyp "M" oder Verbindungstyp "B" der ersten der Stationen mit einem Verbindungstyp "A" der zweiten der Stationen verbunden ist.

22. LAN nach Anspruch 18, wobei die Einrichtung zum Entscheiden eine Einrichtung enthält zum Ungültigerklären der Verbindung eines Verbindungstyps "M" einer ersten Station mit einer zweiten Station, die eine DAS oder eine DASANC ist, wenn ein Verbindungstyp "A" oder "B" der ersten Station mit einem Verbindungstyp "M" einer dritten Station verbunden ist.

23. LAN nach Anspruch 14, wobei die Einrichtung zum Bestimmen folgendes enthält: eine Einrichtung, die zu jeder der physikalischen Verbindungen eines Verbindungstyps "A" gehört, zum Senden eines ersten Nachrichtentyps, eine Einrichtung in jeder der physikalischen Verbindungen eines Verbindungstyps "B" zum Senden eines zweiten Nachrichtentyps, eine Einrichtung in jeder der physikalischen Verbindungen eines Verbindungstyps "M" zum Senden eines dritten Nachrichtentyps, und eine Einrichtung in jeder der physikalischen Verbindungen eines Verbindungstyps "S" zum Senden eines vierten Nachrichtentyps.

24. LAN nach Anspruch 23, wobei die Einrichtung zum Bestimmen folgendes enthält: eine Einrichtung in jeder der physikalischen Verbindungen des Verbindungstyps "A" zum Akzeptieren des zweiten und dritten Nachrichtentyps als gültig, eine Einrichtung in jeder der physikalischen Verbindungen des Verbindungstyps "B" zum Akzeptieren des ersten Nachrichtentyps als gültig, eine Einrichtung in jeder der physikalischen Verbindungen des Verbindungstyps "M" zum Akzeptieren des ersten und des vierten Nachrichtentyps als gültig, und eine Einrichtung in jeder der physikalischen Verbindungen des Verbindungstyps "S" zum Akzeptieren der dritten und vierten Nachrichtentypen als gültig.

## Revendications

1. Méthode de contrôle de la topologie d'un réseau local LAN (150) comportant de multiples stations dont chacune est l'une quelconque parmi une station à une seule connexion SAS (10), une station à deux connexions DAS (12), une station de concentration de fils WC, une station SAS/WC et une station DAS/WC, les multiples stations étant respectivement interconnectées par des connexions physiques de point à point en duplex (160), la méthode comprenant les étapes qui consistent à :

échanger des informations de connexion de stations par l'intermédiaire des connexions physiques uniquement entre des stations adjacentes;

déterminer, dans chacune des stations, par l'analyse desdites informations de connexion échangées, la validité de toutes les connexions avec chacune desdites stations adjacentes conformément à une liste de connexions prédéterminée PCM;

identifier, dans chacune des stations, des connexions valides et non valides conformément à ladite liste de connexions; et

effectuer, dans chacune des stations, des interventions relatives aux interconnexions de la station en fonction des résultats de l'étape d'identification concernant la station, les interventions de toutes les stations réalisant un anneau primaire (22) désigné globalement.

2. Méthode selon la revendication 1, suivant laquelle ladite étape d'échange comprend une étape d'échange de trois types distincts de messages (M, A, B).

3. Méthode selon la revendication 1, suivant laquelle chacune des connexions physiques d'une station comporte deux liaisons, et ladite étape de détermination comprend une étape d'identification de l'une desdites liaisons ou les deux de chacune des connexions physiques de point à point en duplex pour former un anneau primaire (22) désigné globalement.

4. Méthode selon la revendication 1, suivant laquelle lesdites connexions physiques (160) définissent un anneau primaire (22) comprenant au moins une première des stations, et également un anneau secondaire (24) comprenant au moins une seconde des stations, et suivant laquelle ladite étape d'intervention comprend une étape de reconfiguration interne de la première station, pour ainsi permettre à la seconde station de communiquer par l'intermédiaire dudit anneau primaire désigné globalement.

5. Méthode selon la revendication 1, suivant laquelle ladite étape d'intervention comprend les étapes de rejet desdites connexions non valides et d'interdiction, grâce à une reconfiguration interne de la station, de la transmission ou de la réception de données d'utilisateur par l'intermédiaire desdites connexions rejetées.

6. Méthode selon la revendication 1, suivant laquelle chaque SAS possède une connexion physique de type "S", chaque DAS possède des connexions physiques comprenant une connexion de type "A" et une connexion de type "B", chaque WC possède de multiples connexions physiques de type "M", et chaque DAS/WC possède des connexions physiques comprenant une connexion de type "A", une connexion de type "B" et plusieurs connexions de type "M", et suivant laquelle ladite étape d'échange comprend l'échange d'informations indiquant le type desdites connexions physiques desdites stations adjacentes, ladite étape d'échange comprenant l'échange de messages correspondant à chacun desdits types de connexion.

7. Méthode selon la revendication 1, suivant laquelle ladite étape de détermination comprend une étape de décision de la validité de ladite connexion avec chacune desdites stations adjacentes en fonction du type de connexion physique de la station qui émet lesdites informations de connexion et du type de la connexion physique qui reçoit lesdites informations de connexion, ladite étape de détermination comprenant une étape de validation desdites connexions conformément à la matrice de connexions suivante:

<div align="center">

"MON EXTREMITE"

|  |  | A | B | M | S |
|---|---|---|---|---|---|
|  | A | I | V | V | I |
| "AUTRE | B | V | I | I | I |
| EXTREMITE" | M | REGLE | I | I | V |
|  | S | I | I | V | V |

V = VALIDE

I = NON VALIDE

</div>

les colonnes de ladite matrice correspondant au type d'une connexion physique d'une première des stations au niveau d'une extrémité d'une connexion physique désignée MON EXTREMITE, tandis que les rangées de ladite matrice correspondent au type de connexion transmis par une seconde des stations au niveau d'une extrémité d'une connexion physique désignée AUTRE EXTREMITE, et ladite REGLE autorisant comme valide une connexion de type "A" au niveau de MON EXTREMITE avec une connexion de type "M" au niveau de l'AUTRE EXTREMITE si, et seulement si, aucune connexion de type "M" ou de type "B" de ladite première des stations au niveau de MON EXTREMITE n'est connectée à une connexion de type "A" pour ladite seconde des stations au niveau de l'AUTRE EXTREMITE.

8. Méthode selon la revendication 7, suivant laquelle ladite étape de décision comprend les étapes de validation de la connexion d'une connexion de type "A" d'une première des stations avec une connexion de type "B" d'une seconde desdites stations, d'invalidation de la connexion d'une connexion de type "A" d'une première des stations et d'invalidation de la connexion d'une connexion de type "B" d'une première des stations avec une connexion de type "B" d'une seconde des stations.

9. Méthode selon la revendication 7, suivant laquelle ladite étape de décision comprend les étapes d'invalidation de la connexion d'une connexion de type "B" d'une première des stations avec une connexion de type "M" d'une seconde des stations, et de validation de la connexion d'une connexion de type "A" d'une première des stations avec une connexion de type "M" d'une seconde des stations si, et seulement si, aucune connexion de type "M" ou de type "B" de ladite première des stations n'est connectée à une connexion de type "A" de ladite seconde des stations.

10. Méthode selon la revendication 7, suivant laquelle ladite étape de décision comprend une étape d'invalidation de la connexion d'une connexion de type "M" d'une première station avec une seconde station qui est une DAS ou une DAS/WC lorsqu'une connexion de type "A" ou de type "B" de ladite première

**EP 0 352 883 B1**

station est connectée à une connexion de type "M" d'une troisième station.

11. Méthode selon la revendication 7, suivant laquelle lesdites connexions physiques définissent un anneau primaire et également un anneau secondaire comprenant un arbre de stations DAS/WC possédant chacune une connexion physique non valide de type "M", et suivant laquelle ladite étape d'intervention comprend, pour chaque station DAS/WC d'un arbre, une étape de reconfiguration interne des stations DAS/WC, pour ainsi permettre aux stations de communiquer par l'intermédiaire dudit anneau primaire désigné globalement.

12. Méthode selon la revendication 6, suivant laquelle ladite étape de détermination comprend une étape de décision de la validité d'une première connexion entre une première station et une seconde station en fonction des types de connexion de la première connexion et des types de connexion d'une seconde connexion entre la première station et une troisième station.

13. Méthode selon la revendication 1, suivant laquelle ladite étape de détermination comprend les étapes d'émission, par chacune desdites connexions physiques de type "A", d'informations de connexion d'un premier type de message; d'émission, par chacune desdites connexions physiques de type "B", d'informations de connexion d'un second type de message; d'émission, par chacune desdites connexions physiques de type "M", d'informations de connexion d'un troisième type de message; et d'émission, par chacune desdites connexions physiques de type "S", d'informations de connexion d'un quatrième type de message.

14. Réseau local LAN (150) doté d'une topologie à auto-contrôle, comprenant :
de multiples stations (10, 12, 28, 32) dont chacune est l'une quelconque parmi une station à une seule connexion SAS, une station à deux connexions DAS, une station de concentration de fils WC, une station SAS/WC et une station DAS/WC;
de multiples connexions physiques de point à point en duplex (160) interconnectant lesdites stations;
des moyens pour, dans chaque station, échanger des informations de connexion de stations, comprenant des informations de type de connexion pour les connexions physiques, par l'intermédiaire desdites connexions physiques uniquement entre des stations adjacentes;
des moyens pour déterminer, dans chacune des stations par l'analyse desdites informations échangées, la validité de toutes les connexions avec chacune desdites stations adjacentes conformément à une liste de connexions prédéterminée;
des moyens sensibles, dans chaque station, aux moyens de détermination, pour identifier des connexions valides et non valides conformément à ladite liste de connexions; et
des moyens sensibles, dans chaque station, aux moyens d'identification, pour effectuer des interventions relatives à l'interconnexion de la station, les interventions de toutes les stations réalisant un anneau primaire (22) désigné globalement.

15. LAN selon la revendication 14, dans lequel lesdits moyens d'échange comprennent des moyens pour échanger des informations de connexion comprenant trois types distincts de messages (M, A, B).

16. LAN selon la revendication 14, dans lequel chacune desdites connexions physiques d'une station possède deux liaisons et lesdits moyens de détermination comprennent des moyens pour identifier comme valide l'une desdites liaisons ou les deux de chacune des connexions physiques de point à point en duplex (160) qui forment un anneau primaire (22) désigné globalement, dans lequel lesdits moyens d'intervention comprennent des moyens pour rejeter, grâce à une reconfiguration interne de la station, lesdites connexions non valides, afin d'interdire ainsi la transmission ou la réception de données d'utilisateur par l'intermédiaire desdites connexions rejetées, dans lequel lesdites connexions définissent un anneau primaire comprenant au moins une première des stations, et également un anneau secondaire (24) comprenant au moins une seconde des stations, et dans lequel lesdits moyens d'intervention comprennent des moyens pour reconfigurer intérieurement la première station, afin de permettre ainsi à la seconde station de communiquer par l'intermédiaire dudit anneau primaire.

17. LAN selon la revendication 16, dans lequel chacune desdites SAS comporte une connexion physique de type "S", chacune desdites DAS comporte des connexions physiques comprenant une connexion de type "A" et une connexion de type "B", chacune desdites WC comporte de multiples connexions physiques de type "M", et chacune desdites DAS/WC comporte des connexions physiques comprenant une connexion de type "A", une connexion de type "B", et plusieurs connexions de type "M".

18. LAN selon la revendication 17, dans lequel lesdites informations échangées indiquent le type de connexion de ladite station adjacente, dans lequel lesdits moyens d'échange comprennent des moyens pour échanger des messages correspondant audit type de connexion, dans lequel lesdits moyens de détermination comprennent des moyens pour décider de la validité de ladite connexion avec chacune desdites stations adjacentes en fonction du type de la connexion physique de la station qui émet lesdites informations de connexion et du type de la connexion physique qui reçoit lesdites informations de connexion.

19. LAN selon la revendication 17, dans lequel lesdits moyens de détermination comprennent des moyens pour valider lesdites connexions conformément à la matrice de connexions suivante :

<pre>
                              "MON  EXTREMITE"

                          A       B       M       S
                  A       I       V       V       I
      "AUTRE      B       V       I       I       I           V  =  VALIDE
      EXTREMITE"  M     REGLE     I       I       V           I  =  NON  VALIDE
                  S       I       I       V       V
</pre>

les colonnes de ladite matrice correspondant au type d'une connexion physique d'une première des stations au niveau d'une extrémité d'une connexion physique désignée MON EXTREMITE, tandis que les rangées de ladite matrice correspondent au type de connexion signalé par une seconde des stations au niveau d'une extrémité d'une connexion physique désignée AUTRE EXTREMITE, et ladite REGLE autorisant comme valide une connexion de type "A" au niveau de MON EXTREMITE avec une connexion de type" M" au niveau de l'AUTRE EXTREMITE si, et seulement si, aucune connexion de type "M" ou de type "B" de ladite première des stations au niveau de MON EXTREMITE n'est connectée à une connexion de type "A" pour ladite seconde des stations au niveau de l'AUTRE EXTREMITE.

20. LAN selon la revendication 18, dans lequel lesdits moyens de décision comprennent des moyens pour valider la connexion d'une connexion de type "A" d'une première des stations avec une connexion de type "B" d'une seconde des stations, pour invalider la connexion d'une connexion de type "A" d'une première des stations avec une connexion de type "A" d'une seconde des stations et pour invalider la connexion d'une connexion de type "B" d'une première des stations avec une connexion de type "B" d'une seconde des stations.

21. LAN selon la revendication 18, dans lequel lesdits moyens de décision comprennent des moyens pour invalider la connexion d'une connexion de type "B" d'une première des stations avec une connexion de type "M" d'une seconde des stations, et pour valider la connexion d'une connexion de type "A" d'une première des stations avec une connexion de type "M" d'une seconde des stations si, et seulement si, aucune connexion de type "M" ou de type "B" de ladite première des stations n'est connectée à une connexion de type "A" de ladite seconde des stations.

22. LAN selon la revendication 18, dans lequel lesdits moyens de décision comprennent des moyens pour invalider la connexion d'une connexion de type "M" d'une première station avec une seconde station qui est une DAS ou une DAS/WC lorsqu'une connexion de type "A" ou de type "B" de ladite première station est connectée à une connexion de type "M" d'une troisième station.

23. LAN selon la revendication 14, dans lequel lesdits moyens de détermination comprennent des moyens associés à chacune desdites connexions physiques de type "A" pour émettre un premier type de message, des moyens dans chacune desdites connexions physiques de type "B" pour émettre un second type de message, des moyens dans chacune desdites connexions physiques de type "M" pour émettre un troisième type de message, et des moyens dans chacune desdites connexions physiques de type "S" pour émettre un quatrième type de message.

24. LAN selon la revendication 23, dans lequel lesdits moyens de détermination comprennent des moyens dans chacune desdites connexions physiques dudit type "A" pour accepter comme valides lesdits second et troisième types de messages, des moyens dans chacune desdites connexions physiques dudit type "B" pour accepter comme valide ledit premier type de message, des moyens dans chacune desdites connexions physiques dudit type "M" pour accepter comme valides lesdits premier et quatrième types de messages, et des moyens dans chacune desdites connexions physiques dudit type "S" pour accepter comme valides lesdits troisième et quatrième types de messages.

## FIG. 1A

10

SAS

S

## FIG. 1B

A

B

12

DAS

## FIG. 1C

14

WC

M M M M M M M

## FIG. 1D

A

B

16

DAS / WC

M M M M

## FIG. 6

200

DAS / WC    DAS / WC    DAS / WC    DAS / WC

204

212

208

DAS / WC

## FIG. 2

## FIG. 3

*FIG. 4*

*FIG. 5*

## FIG. 7

## FIG. 8

PCM

LS_REQUEST (i) = QLS
TRANSMIT_PDR (i) = FALSE
N_TYPE (i) = NULL

304

300

LS_REQUEST (i) = QLS FOR
TIME ≧ Tb
RESET TLA

308

LS_REQUEST (i) = DLS
(PER TABLE , GIVEN MY_TYPE )

312

IF
LS_INDICATE (i)
= DLS ?

316

YES

N_TYPE (i) : = DLS
( PER TABLE )

320

NO

IF
TLA > Tdmin
AND N_TYPE
(i) ≠ NULL
?

324

YES

IF
PC_TYPE (i) = OK

328

NO

YES

TRANSMIT_PDR (i) = TRUE
SEND ILS OR
PHY_DATA REQUEST

332

YES

IF
LS_INDICATE (i) = ILS
OR
LS_INDICATE (i) = ALS
?

336

NO

IF
(PER TABLE)
LS_INDICATE (i) : =
N_TYPE (i)
?

340

YES

NO

## FIG. 9A

360

366

MOVE ( i )
( SHOWN FALSE )

DPDT

368

364

DPDT

(SHOWN
FALSE)

MOVE ( i )
DPS_ENABLE

PPE_SERVICE ( i )
( PHY )

## FIG. 9B

370

372 N    372 N-1    372 N+1    372 N-2    372 3    372 2    372 1

374

i = N    i=N-1    i=N+1    i=N-2    i = 3    i = 2    i = 1

TYPE
B

TYPE
A

PRIMARY
MAC

TYPE
M

TYPE
M

TYPE
M

TYPE
M

## FIG. 10

## FIG. 11

MY_TYPE (i) = "A"

```
LOOP_WARNING = FALSE        404
PC_TYPE (i) = NOT_OK
```

400

```
MODE (i) = NOT_TREE        408
MOVE (i) = FALSE
```

IF
N_TYPE (i) =
NULL          412

YES → 
```
PC_TYPE (i) = NOT_OK
LOOP_WARNING = FALSE
```

NO

IF
N_TYPE(i) =
A OR S          416

YES →          420
```
PC_TYPE(i) = NOT_OK
LOOP_WARNING = FALSE
SIGNAL ILLEGAL CONNECTION- - -
```

NO

IF
N_TYPE (i) = B          428

YES →          432
```
PC_TYPE (i) = OK
LOOP_WARNING = FALSE
```

NO

IF
N_TYPE (i) = M          436

YES →

IF
MODE (1,...n) =
TREE OR
ROOT          440

NO →          444
```
PC_TYPE (i) = OK
```

NO

YES

IF
MODE (1,...n) =
ROOT          448

NO

YES →

456

IF
POLICY:

DISCONNECT →

MOVE

IF
1 OR LESS OF
MODE (1,...n)
= TREE          460

NO
(CAN'T
RESOLVE) →          452
```
PC_TYPE (i) = NOT_OK
LOOP_WARNING = FALSE
SIGNAL ILLEGAL CONNECTION- - -
```

YES          464

```
PC_TYPE (i) = OK
LOOP_WARNING = TRUE
```

## FIG. 12

MY_TYPE (i) = "B"

MODE (i) = NOT_TREE
PC_TYPE (i) = NOT_OK — 504

500

MOVE (i) = FALSE — 508

512

IF
N_TYPE (i) =
NULL

— YES → PC_TYPE (i) = NOT_OK
MODE (i) = NOT_TREE — 516

NO

520

IF
N_TYPE (i) =
A

— YES → PC_TYPE (i) = OK
MODE (i) = ROOT — 524

NO

530

IF
N_TYPE (i) =
B,M OR S

— YES → PC_TYPE (i) = NOT_OK
MODE (i) = NOT_TREE
SIGNAL ILLEGAL CONNECTION- - - — 534

**FIG. 13**

MY_TYPE (i) = "M"

```
MODE (i) NOT_TREE        604
MOVE (i) = FALSE
PC_TYPE (i) = NOT_OK
```

600

608
IF
N_TYPE (i) =
NULL

YES →
```
                                    612
PC_TYPE (i) = NOT_OK
MODE (i) = NOT_TREE
MOVE(i) = FALSE
```

NO

616
IF
N_TYPE (i) = A

YES →
```
                            620
PC_TYPE (i) = OK
MODE (i) = TREE
```

NO

624
IF
LOOP_WARNING =
TRUE

NO →
```
                        628
MOVE (i) = FALSE
```

YES

632
```
MOVE (i) = TRUE
```

636
IF
N_TYPE (i) = S

YES →
```
                                640
PC_TYPE (i) = OK
MODE (i) = NOT_TREE
MOVE(i) = FALSE
```

NO

644
IF
N_TYPE (i) =
M OR B

YES →
```
                                    648
PC_TYPE (i) = NOT_OK
MODE (i) = NOT_TREE
MOVE(i) = FALSE
SIGNAL ILLEGAL CONNECTION
```

## FIG. 14

FIG. 15

## FIG. 16

MY_TYPE (i) = "S"

PC_TYPE (i) = NOT_OK — 804

800

MODE (i) = NOT_TREE
MOVE (i) = FALSE — 808

812
IF
N_TYPE (i) =
NULL

816
PC_TYPE (i) = NOT_OK

820
IF
N_TYPE (i) =
M OR S

824
PC_TYPE (i) = OK

828
IF
N_TYPE (i) =
A OR B

832
PC_TYPE (i) = NOT_OK